(19) Europäisches Patentamt

European Patent Office

Office européen des brevets

(11) **EP 1 354 453 B1**

(12) **FASCICULE DE BREVET EUROPEEN**

(45) Date de publication et mention
de la délivrance du brevet:
**25.05.2005 Bulletin 2005/21**

(21) Numéro de dépôt: **02706830.3**

(22) Date de dépôt: **25.01.2002**

(51) Int Cl.[7]: **H04L 27/00**, H04L 27/26

(86) Numéro de dépôt international:
**PCT/FR2002/000329**

(87) Numéro de publication internationale:
**WO 2002/060140 (01.08.2002 Gazette 2002/31)**

(54) **PROCEDE DE TRANSMISSION ET RECEPTION D'UN SIGNAL MULTIPORTEUSE BIORTHOGONAL MODULE SYNCHRONIQUEMENT, DISPOSITIFS D'EMISSION ET DE RECEPTION CORRESPONDANTS**

VERFAHREN ZUR ÜBERTRAGUNG UND ZUM EMPFANG EINES SYNCHRONEN MODULIERTEN BIORTHOGONALEN MERHTRÄGERSIGNALES, SOWIE VORRICHTUNGEN ZUR ÜBERTRAGUNG UND ZUM EMPFANG DAFÜR

METHOD FOR TRANSMITTING AND RECEIVING A BIORTHOGONAL FREQUENCY MULTIPLEX SYNCHRONOUS MODULATED SIGNAL, CORRESPONDING DEVICES FOR TRANSMITTING AND RECEIVING

(84) Etats contractants désignés:
**DE ES GB IT**

(30) Priorité: **25.01.2001 FR 0101050**

(43) Date de publication de la demande:
**22.10.2003 Bulletin 2003/43**

(73) Titulaires:
• **FRANCE TELECOM**
  **75015 Paris (FR)**
• **TELEDIFFUSION DE FRANCE**
  **75015 Paris (FR)**

(72) Inventeurs:
• **SICLET, Cyrille**
  **F-35700 RENNES (FR)**
• **SIOHAN, Pierre**
  **F-35200 RENNES (FR)**

(74) Mandataire: **Vidon, Patrice**
  **Cabinet Vidon**
  **16 B, rue Jouanet - B.P. 90333**
  **Technopole Atalante**
  **35703 Rennes Cedex 7 (FR)**

(56) Documents cités:
**FR-A- 2 799 073**

• **SICLET C ET AL: "Design of BFDM/OQAM systems based on biorthogonal modulated filter banks" PROCEEDINGS OF GLOBAL TELECOMMUNICATIONS CONFERENCE, vol. 2, 27 novembre 2000 (2000-11-27) - 1 décembre 2000 (2000-12-01), pages 701-705, XP002177322 IEEE, Piscataway, NJ, USA ISBN: 0-7803-6451-1**
• **VAIDYANATHAN P P ET AL: "Optimality of principal component filter banks for discrete multitone communication systems" IEEE INTERNATIONAL SYMPOSIUM ON CIRCUITS AND SYSTEMS. EMERGING TECHNOLOGIES FOR THE 21ST CENTURY, vol. 1, 28 - 31 mai 2000, pages 128-131, XP002177324 Lausanne, Switzerland, Presses Polytech. ISBN: 0-7803-5482-6**
• **HLEISS R ET AL: "Oversampled OFDM systems" 13TH INTERNATIONAL CONFERENCE ON DIGITAL SIGNAL PROCESSING PROCEEDINGS., vol. 1, 2 - 4 juillet 1997, pages 329-332, XP002177323 IEEE, New York, NY, USA, ISBN: 0-7803-4137-6**

EP 1 354 453 B1

**Description**

Le domaine de l'invention est celui de la transmission de signaux numériques, basés sur des modulations multiporteuses. Plus précisément, l'invention concerne la transmission, et notamment la modulation et la démodulation des signaux multiporteuses biorthogonaux associés à des porteuses modulées de façon synchrone (BFDM/SM : « Biorthogonal Frequency Division Multiplex/Synchronous Modulation »).

Depuis plusieurs années, les modulations multiporteuses ont suscité un grand intérêt. Celui-ci se justifie, en particulier, dans le cas des communications avec les mobiles, où leur efficacité a déjà été démontrée pour la diffusion des signaux radio avec, tout d'abord, le système « Digital Audio Broadcasting » (DAB, en français : « Diffusion Audionumérique ») [Pommier et al.86] (par souci de simplification et de lisibilité, toutes les références citées dans la présente description ont été regroupées en annexe F) puis le système DVB-T [Sari et al.95] mais également en transmission haut débit sur lignes bifilaires téléphoniques avec les systèmes ADSL (Asymmetric Digital Subscriber Line) et VDSL (Very high bit rate Digital Subscriber Line) [Vandendorpe et al.98]. Plus récemment, l'intérêt des modulations multiporteuses est apparu pour la transmission à haut débit dans les réseaux locaux sans fil (HIPERLAN2 : « HIgh PErformance Radio Local Area Network », [Lacroix-Penther et al.99]).

Dans les schémas de modulations multiporteuses usuels, un ensemble de fréquences porteuses, choisi de manière à satisfaire des conditions d'orthogonalité en temps et en fréquence, est multiplexé. C'est le système dit « Orthogonally Frequency Division Multiplex » (OFDM, en français : « multiplex de fréquences orthogonales »).

Chacune des porteuses transmet des symboles complexes (comprenant une partie réelle et une partie imaginaire) choisis dans un alphabet de modulation donné. Cette modulation peut être synchrone (les parties réelles et imaginaires des Systems Based on Biorthogonal Modulated Filter Banks". Siclet C. et al. Proceedings of Global Telecommunications Conference, 2000. symboles complexes sont transmises en même temps) ou asynchrones (les parties réelles et imaginaires sont décalées d'un demi-temps symbole). On aboutit alors respectivement aux systèmes OFDM/SM (SM : Synchronous Modulation) et OFDM/OM (OM : Offset Modulation).

Ces deux systèmes présentent des avantages et des inconvénients l'un par rapport à l'autre. En particulier, compte-tenu des conditions d'échantillonnage ou de l'introduction d'un intervalle de garde, les systèmes OFDM/SM sont moins efficaces en termes de débit que les systèmes OFDM/OM. En revanche, les systèmes OFDM/OM se heurtent à des problèmes d'estimation de canal plus complexes à résoudre.

Par ailleurs, dans les systèmes OFDM/SM actuels, les porteuses sont espacées de l'inverse du temps symbole. Il s'agit de modulations dites de densité critique (densité 1) qui présentent l'inconvénient de nécessiter un filtre de mise en forme qui soit une fonction rectangle.

On sait également que l'orthogonalité de l'OFDM ne lui assure l'optimalité que dans le cas de canaux de transmission que l'on peut assimiler à un bruit additif blanc et gaussien. Sinon, l'optimalité de l'OFDM n'est pas garantie.

De ce point de vue, les modulations multiporteuses biorthogonales (BFDM) offrent des possibilités supplémentaires et, en particulier, elles peuvent constituer un meilleur compromis vis-à-vis de canaux de type radio-mobiles qui sont à la fois dispersifs en temps et en fréquence [Kozek et al.98]. De telles modulations sont présentées aussi dans la référence suivante: "Design of BFDM/OQAM Systems Based on Biorthogonal Modulated Filter Banks". Siclet C. et al. Proceedings of Global Telecommunications Conference, 2000.

Pour obtenir des fonctions dites prototypes, mieux localisées dans le plan temps-fréquence, l'invention propose d'utiliser des modulations de densité inférieure à 1, et plus précisément des modulations BFDM/SM.

À titre indicatif, on rappelle brièvement, en annexe A, les définitions essentielles concernant les aspects mathématiques liés aux modulations de type BFDM/SM. Ces aspects ont déjà fait l'objet de publications.

L'invention a notamment pour objectif de pallier les différents inconvénients de l'état de l'art, et en particulier de fournir une nouvelle technique de modulation et de démodulation d'un signal BFDM/SM qui soit plus efficace et plus aisée à mettre en oeuvre que les techniques connues.

Ainsi, un objectif de l'invention est de fournir de telles techniques de modulation et de démodulation permettant d'assurer, au moins sur un plan théorique, que l'IES (Interférence entre Symboles) et l'IEC (Interférence entre Canaux) soient exactement nulles, pour un canal parfait.

Un autre objectif de l'invention est de fournir de telles techniques, permettant la mise en oeuvre de fonctions prototypes non rectangulaires, et plus précisément des fonctions prototypes mieux localisées en temps et en fréquence. Un autre objectif est de permettre aussi bien la mise en oeuvre de fonctions prototypes symétriques ou non, et identiques ou non à l'émission et à la réception.

Encore un autre objectif de l'invention est de fournir de telles techniques de modulation et de démodulation, qui permettent de réduire et de contrôler les retards de reconstruction, par exemple pour des applications temps réel ou interactive. En d'autres termes, un objectif est de fournir de telles techniques permettant, pour des filtres prototypes de longueur donnée, d'obtenir des délais de reconstruction qui ne sont pas fixes (et qui peuvent donc être plus faibles que ceux de l'OFDM/SM).

L'invention a également pour objectif de fournir de telles techniques, qui soient optimales, par rapport à des distorsions produites par un canal gaussien et/ou par des canaux non gaussiens qui ne se réduisent pas simplement à un bruit additif blanc et gaussien.

Encore un autre objectif de l'invention est de fournir de telles techniques, permettant d'obtenir des performances supérieures aux techniques connues, en termes de gain et/ou de localisation de la transformée, lorsqu'une telle transformation est utilisée.

L'invention a également pour objectif de fournir des dispositifs de modulation et/ou de démodulation, et plus généralement de transmission et/ou de réception de signaux, qui soient aisés et peu coûteux à réaliser et à mettre en oeuvre.

Dans la présente description, on entend, bien entendu, le terme « biorthogonal », comme englobant le cas des signaux quasi-biorthogonaux, c'est-à-dire réalisés à partir de filtres sensiblement, ou presque, biorthogonaux.

Ces objectifs, ainsi que d'autres qui apparaîtront par la suite, sont atteints selon l'invention à l'aide d'un procédé de transmission et de réception d'un signal multiporteuse biorthogonal synchrone (BFDM/SM), selon la revendication 1.

Avantageusement, le retard décrit dans la revendication 1 présente une durée de b fois la durée d'un desdits symboles modulés, b pouvant être un nombre entier supérieur à 1.

De façon préférentielle, le procédé de l'invention comprend :

- une étape de modulation, à l'aide d'un banc de filtres de synthèse, présentant $K$ branches parallèles, $K \geq 2$, alimentées chacune par des données source, et comprenant chacune un expanseur d'ordre $N > K$ et des moyens de filtrage ;
- une étape d'application d'un retard de reconstruction des symboles modulés, délivrés par ledit banc de filtres de synthèse, à l'aide d'un opérateur délai sur une ligne de transmission alimentée par ledit banc de filtres de synthèse;
- une étape de démodulation, à l'aide d'un banc de filtres d'analyse, présentant $K$ branches parallèles, comprenant chacune un décimateur d'ordree $N > K$ et des moyens de filtrage, et délivrant des données reçues représentatives desdites données source, lesdits moyens de filtrage étant déduits d'une fonction de modulation prototype prédéterminée.

En d'autres termes, l'invention propose une réalisation nouvelle des systèmes de modulation BFDM/SM, basée sur une description système de type transmultiplexeur modulé. Comme cela apparaîtra par la suite, cette technique présente de nombreux avantages, tant en termes de modes de réalisation que d'efficacité des traitements, et notamment de l'annulation de l'IES et de l'IEC.

De façon avantageuse, on prévoit que $N$ est strictement supérieur à $K$. Par ailleurs, préférentiellement, b est strictement inférieur à $N$. Avantageusement, ledit entier b tient compte :

- d'un délai introduit par la structure biorthogonale dudit signal ;
- de la fonction de filtrage biorthogonal appliquée à chaque échantillon.

Notamment, on peut choisir b tel que b = a$N$-D, où :

$D$ est un paramètre entier tel que :

$$\Psi_{m,n} = -\frac{2\pi}{K}.m(nN+\frac{D}{2})$$

$m,n$ : indices en temps et en fréquence des symboles ;
$\Psi_{m,n}$ : décalage de phase additif appliqué à la fonction de filtrage du symbole indicé .

a est un entier représentant un retard de reconstruction correspondant au nombre de symboles de retard entre une séquence émise et une séquence reçue qui lui correspond exactement.

Préférentiellement, lesdits moyens de filtrage dudit banc de filtres de synthèse et/ou dudit banc de filtres d'analyse sont respectivement regroupés sous la forme d'une matrice polyphase.

Cela permet, sur un plan pratique, de simplifier la complexité opératoire du transmultiplexeur.

De façon avantageuse, la matrice polyphase du modulateur comprend une transformée de Fourier inverse à $K$ entrées et $M$ sorties et la matrice polyphase du démodulateur comprend une transformée de Fourier inverse à $M$ entrées et $K$ sorties, avec $M$ le PPCM (Plus Petit Commun Multiple) de $N$ et de $K$. Les inventeurs ont en effet montré que l'utilisation d'une telle transformée, pour laquelle des algorithmes sont disponibles (IFFT), permet de simplifier fortement la réalisation et la mise en oeuvre de l'invention.

Selon un mode de réalisation préférentiel, lesdits filtres de synthèse et lesdits filtres d'analyse sont construits à partir de filtres prototypes respectant la condition suivante :

$$\sum_{n=0}^{n_{l,\lambda}} \breve{G}_{nK+l}(z) G_{\lambda N-b-(nK+l)}(z) + z^{-1} \sum_{n=n_{l,\lambda}+1}^{N_0-1} \breve{G}_{nK+l}(z) G_{M+\lambda N-b-(nK+l)}(z) = \frac{z^{-s}}{2K} d_{\lambda-a,K_0}$$

$$(68),$$

(telle que définie en annexe E).

Cela permet de garantir une reconstruction parfaite.

Dans le cas particulier où $N$ est un multiple de $K$, cela revient à ce que lesdits filtres prototypes respectent la condition suivante :

$$\sum_{n=0}^{n_l} \breve{G}_{nK+l}(z) G_{d-(nK+l)}(z) + z^{-1} \sum_{n=n_l+1}^{N_0-1} \breve{G}_{nK+l}(z) G_{M+d-(nK+l)}(z) = \frac{z^{-s}}{2K} \qquad (69)$$

(telle que définie en annexe E).

Si le produit de l'invention met en oeuvre une modulation OFDM/SM, cela revient à ce que

$$\sum_{n=0}^{N_0-1} z^{a_{\lambda,nK+l}} \breve{G}_{nK+l}(z) \widetilde{\breve{G}}_{nK+l+(a_\lambda+a_{\lambda,nK+l}K_0)N}(z) = \frac{\delta_{a_\lambda,0}}{2K} \qquad (71)$$

(telle que définie en annexe E).

L'invention concerne également le procédé de modulation d'un signal transmis selon le procédé de transmission décrit ci-dessus. Un tel procédé de modulation met avantageusement en oeuvre une transformée de Fourier inverse alimentée par $K$ données source, et alimentant $M$ modules de filtrage, suivis chacun d'un expanseur d'ordre $N$, dont les sorties sont regroupées puis transmises.

Pour un ensemble de symboles complexes $c_{m,n}$ à transmettre, l'algorithme de modulation peut alors délivrer des données $s[k]$ telles que (cf. annexe C):

$$x_m^0(n) = c_{m,n}$$

$$x_l^1(n) = \sqrt{2} \sum_{k=0}^{K-1} x_k^0(n) e^{-j\frac{2\pi}{K}k\frac{D}{2}} e^{j\frac{2\pi}{K}kl}$$

$$\left[ x_0^1(n) \quad \cdots \quad x_{M-1}^1(n) \right] = K\sqrt{2}\ \mathrm{IFFT}\left[ x_0^0(n) \quad \cdots \quad x_{K-1}^0(n) e^{-j\frac{2\pi}{K}(K-1)\frac{D}{2}} \right]$$

$$x_l^2(n) = \sum_k p[l+kM] x_k^1(n-K_0 k)$$

$$s[k] = \sum_{n=\left\lfloor \frac{k}{M} \right\rfloor - 1}^{\left\lfloor \frac{k}{M} \right\rfloor} x_{k-nM}^2(n)$$

où

$$D = aN - b,$$

avec

*a* entier présentant le retard de reconstruction ;

*b* entier compris entre 0 et *N* - 1 ;

et $\lfloor \cdot \rfloor$ est la fonction "partie entière",
et

$$M = K_0 \ N = N_0 \ K,$$

et $p[k]$ une fonction discrète, causale, de support fini, appelée prototype de modulation.

De la même façon, l'invention concerne le procédé de démodulation d'un signal transmis selon le procédé de transmission décrit précédemment. Ce procédé de démodulation met avantageusement en oeuvre une transformée de Fourier inverse alimentée par *M* branches, elles-mêmes alimentées par ledit signal transmis, et comprenant chacune un décimateur d'ordre *N* suivi d'un module de filtrage, délivrant une estimation des données source.

Le procédé de démodulation peut ainsi, avantageusement, délivrer des données $\hat{c}_{m,n-a}$ telles que :

$$\hat{x}_l^2(n-a) = s[nN-b-l]$$

$$\hat{x}_l^1(n-a) = \sum_k \breve{p}(l+kM)\hat{x}_l^2(n-a-K_0 k)$$

$$\hat{x}_l^0(n-a) = \sqrt{2}\ e^{-j\frac{2\pi}{K}l\frac{D}{2}} \sum_{k=0}^{K-1} \hat{x}_l^1(n-a)\ e^{j\frac{2\pi}{K}kl}$$

$$\left[\hat{x}_0^0(n-a) \quad \cdots \quad \hat{x}_{K-1}^0(n-a)\right] = K\sqrt{2}\ e^{-j\frac{2\pi}{K}l\frac{D}{2}} \mathrm{IFFT}\left[\hat{x}_0^1(n-a) \quad \cdots \quad \hat{x}_{M-1}^1(n-a)\right]$$

$$\hat{c}_{m,n-a} = \hat{x}_m^0(n-a)$$

avec $\breve{p}[k]$ une fonction discrète, causale, de support fini, appelée prototype de démodulation.

Selon un mode de réalisation particulier, ledit signal multiporteuse biorthogonal est un signal OFDM/SM. Des solutions techniques particulières peuvent alors être envisagées.

L'invention concerne également, bien sûr, les dispositifs d'émission et/ou de réception d'un signal BFDM/SM, mettant en oeuvre les procédés présentés ci-dessus.

D'autres caractéristiques et avantages de l'invention apparaîtront plus clairement à la lecture de modes de réalisation préférentiels, donnés à titre de simples exemples illustratifs et non limitatifs, et des dessins annexés parmi lesquels :

- la figure 1 illustre la structure générale d'un transmultiplexeur associé à la modulation BFDM/SM, selon l'invention ;
- la figure 2 est une représentation sous une forme polyphase du transmultiplexeur de la figure 1 et la figure 3 est une représentation équivalente de la figure 2, de plus faible complexité opératoire;
- les figures 4 et 5 présentent respectivement un modulateur et un démodulateur BFDM/SM réalisés à l'aide d'une FFT inverse ;

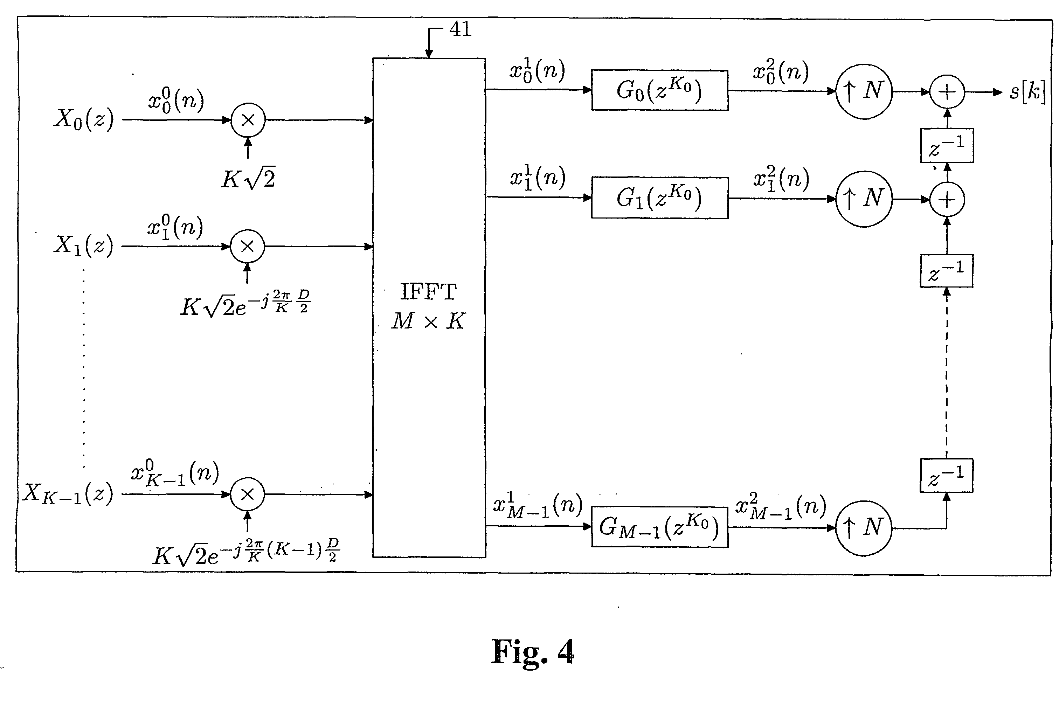

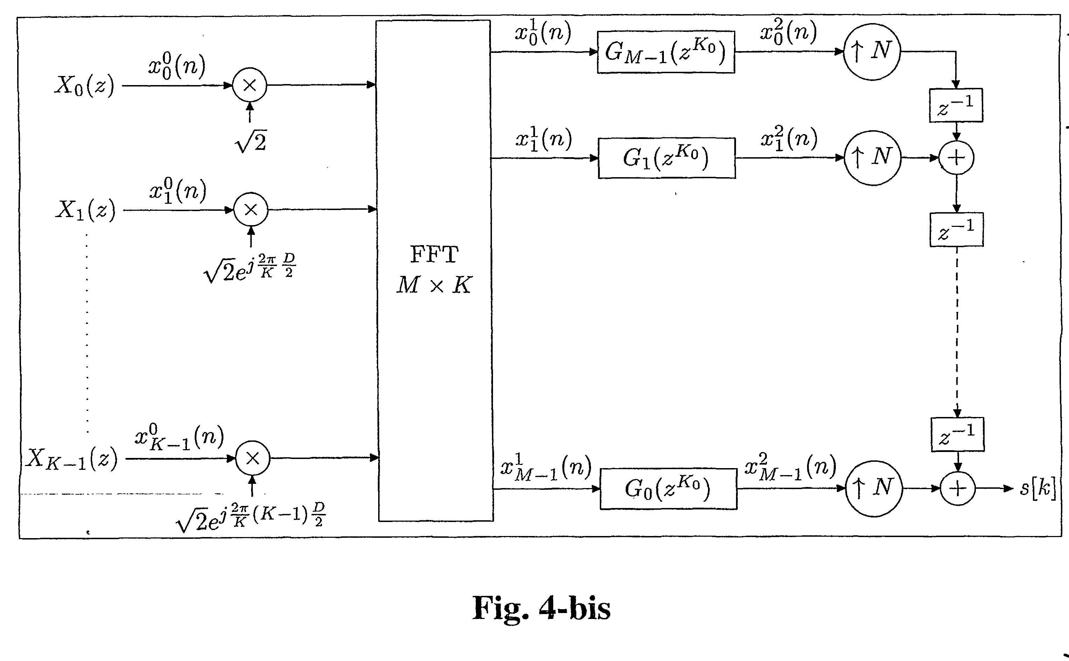

- les figures 4-bis et 5-bis présentent respectivement un modulateur et un démodulateur BFDM/SM réalisés à l'aide d'une FFT directe, dans le cas où $D=mM$-1 ;

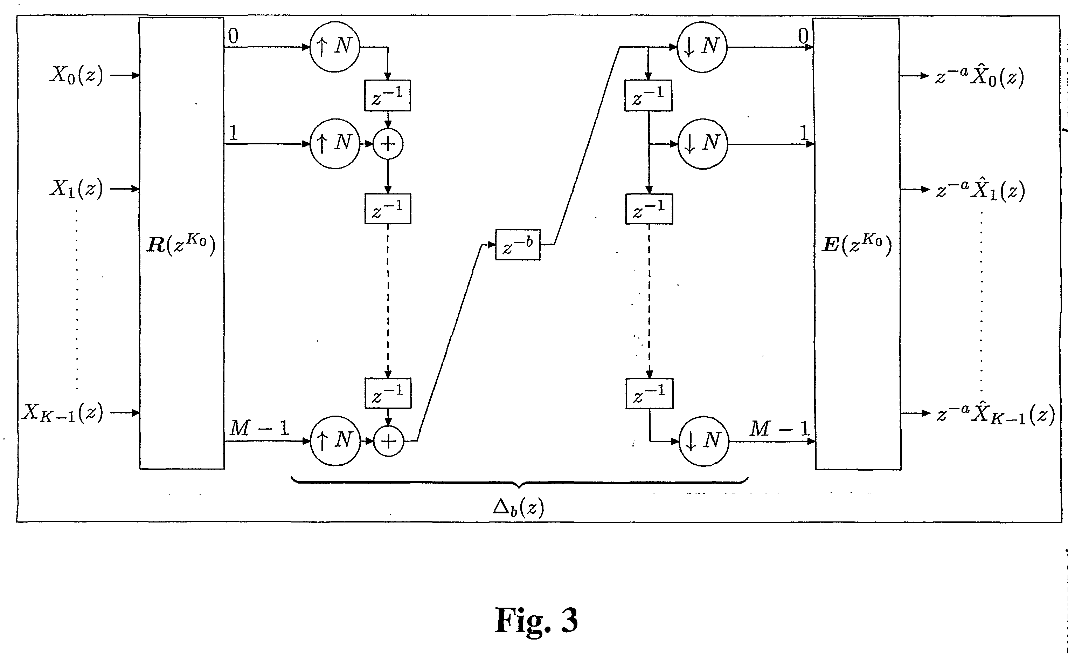

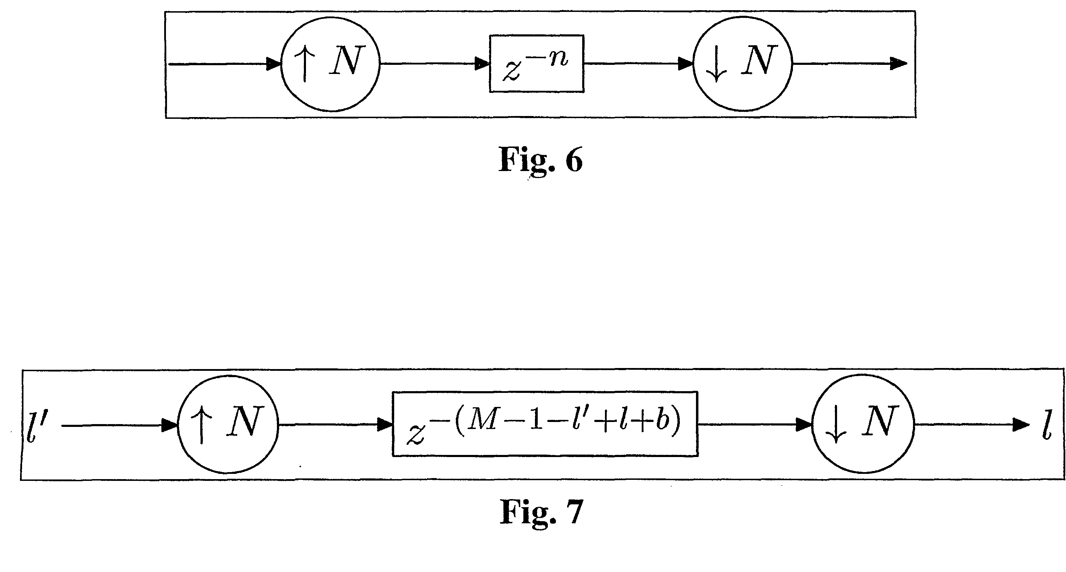

- la figure 6 illustre sur un cas élémentaire, l'insertion d'un opérateur de retard placé entre un expanseur et un décimateur et la figure 7 présente une application de la figure 6 utilisée dans la mise en oeuvre de la représentation polyphase de la figure 3 (cf. annexe D).

Comme indiqué précédemment, la technique de l'invention repose notamment sur une approche particulière de discrétisation, visant à obtenir directement une description du système de type transmultiplexeur modulé. Outre l'avantage d'un cadre de description plus général, cette approche offre de nombreuses possibilités d'exploitation des liens entre les bancs de filtres et les transmultiplexeurs, pour l'optimisation des structures de réalisation et du calcul des coefficients associés.

Des méthodes de design de filtres prototypes illustrant ces procédés de réalisation des modulations BFDM/SM et OFDM/SM peuvent être envisagées. L'optimisation peut porter directement sur les coefficients $p[k]$, dans leur représentation sous forme transverse (filtre RIF) ou récursive (filtre RII). L'utilisation d'échelles comme pour les systèmes BFDM/OM ou de trellis comme pour les systèmes OFDM/OM ([Siohan et al.99]) ou pour les bancs suréchantillonnés modulés en cosinus ([Bölcskei et al.98]), n'est pas à exclure.

Pour faciliter la lecture, on retient les notations suivantes : les ensembles, par exemple **R** le corps réel, ainsi que les vecteurs et matrices, par exemple **E**($z$) et **R**($z$) les matrices polyphases, sont notés en caractère gras. Sinon l'ensemble des symboles mathématiques utilisés est noté en caractère standard avec, en général les fonctions du temps en minuscules et les fonctions des domaines transformés ($z$ et Fourier) en majuscules.

### 1 - Formulation sous forme d'un transmultiplexeur

Dans la suite, on réalise les filtres prototypes considérés sont causaux et de support fini (filtres de type RIF), mais il est à noter que ces développements mathématiques sont également valables pour des prototypes quelconque (filtres de types RII).

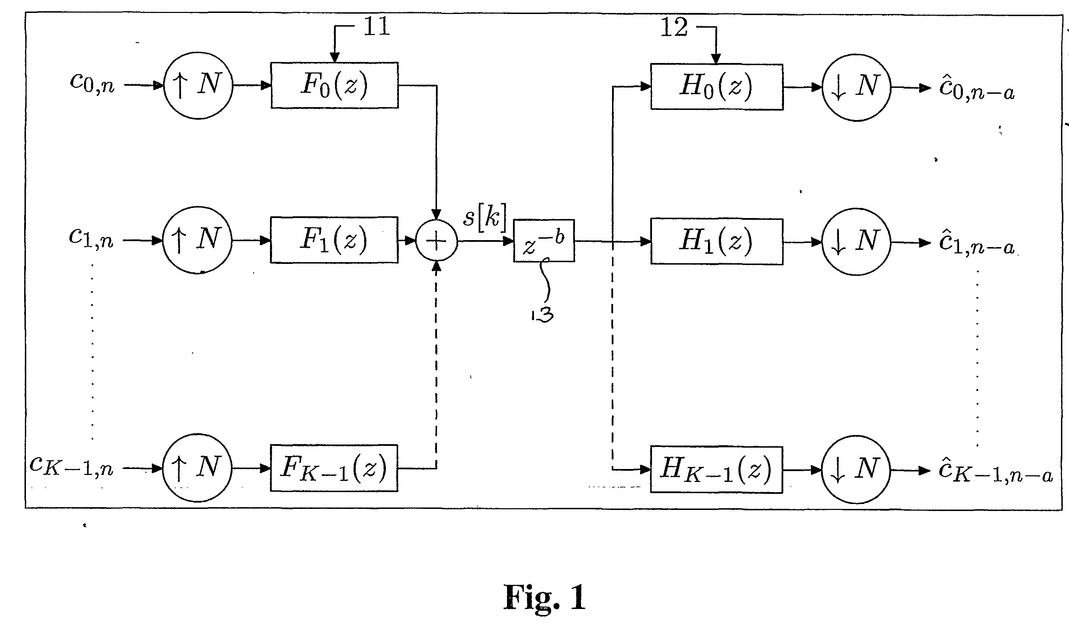

À partir des filtres prototypes causaux $p[k]$ et $\breve{p}[k]$, déduits respectivement de $\chi(t)$ et $\breve{\chi}(t)$ par translation et discrétisation, nous obtenons un schéma de réalisation qui est celui de la figure 1 (cf. annexe B).

Dans ce schéma les filtres $F_i(z)$ 11 et $H_i(z)$ 12, avec $0 \leq i \leq K$ - 1, se déduisent respectivement de $p[k]$ (ou $P(z)$) et $\breve{p}[k]$ (ou $\breve{P}(z)$) par modulation complexe. $a$ et $b$, $0 \leq b \leq N$ - 1, sont deux entiers qui se relient à un paramètre $D$ de la modulation : $D = aN$ - $b$. Les calculs permettant d'aboutir à ce schéma sont reportés en annexe B.

La réalisation d'un schéma de modulation et de démodulation directement selon cette figure 1 serait extrêmement coûteuse, en termes de complexité opératoire. Selon l'approche de l'invention, on décompose donc les filtres prototypes $P(z)$ et $\breve{P}(z)$, en fonction de leurs composantes polyphases respectives $G_l(z)$ et $\breve{G}_{,l}(z)$ ainsi que cela est présenté en annexe C.

En outre, l'annexe D précise également la relation d'entrée-sortie, et l'annexe E établit les conditions à.respecter sur les composantes polyphases et le retard de construction.

### 2 - Schéma de réalisation

Le mode de réalisation décrit par la suite est basé sur la mise en oeuvre d'une transformée de Fourier discrète (TFD).

Cette technique présente bien entendu l'avantage que la TFD se traduit par des algorithmes de calcul rapides, intitulés selon leur sigle anglo-saxon FFT, ou IFFT pour la transformée inverse.

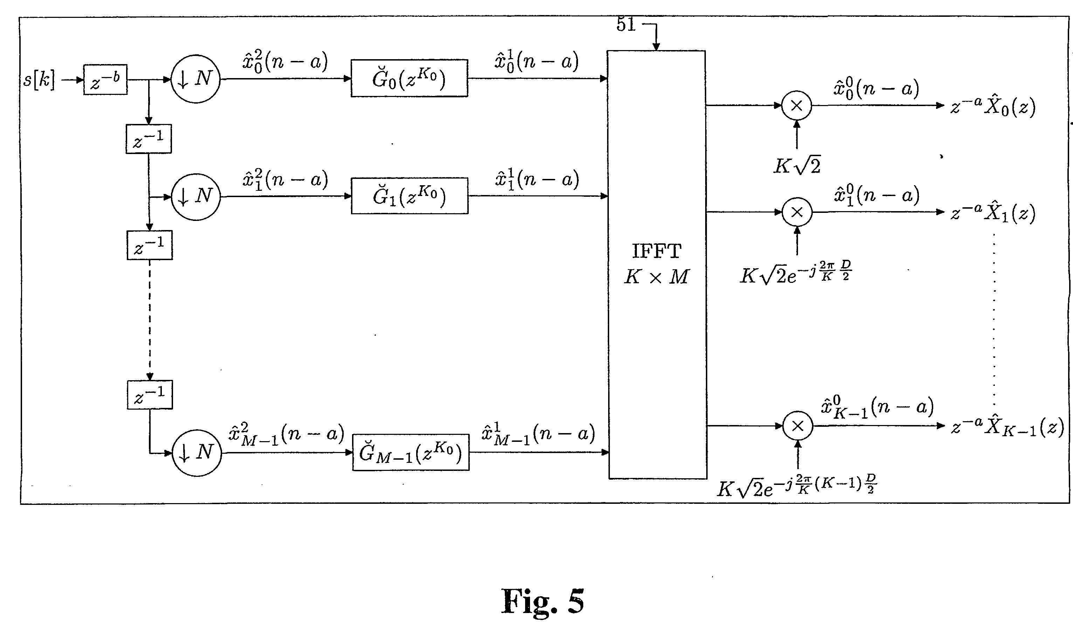

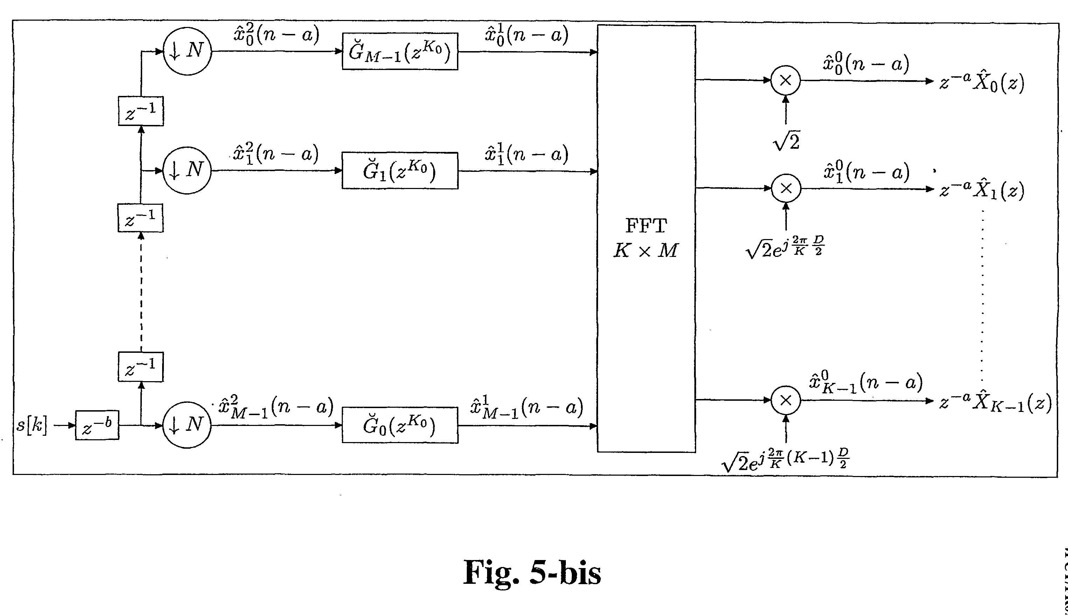

Des calculs menés en annexe C, on déduit les schémas du modulateur de la figure 4 et du démodulateur de la figure 5, tous deux réalisés à l'aide d'une transformée de Fourier inverse IFFT 41, 51.

Les notations et données apparaissant sur les figures 4 et 5, de même que sur les autres figures, font bien sûr partie intégrante de la présente description.

Pour simplifier, mais sans perte de généralité, on suppose par la suite que les filtres prototypes $P(z)$ et $\breve{P}(z)$ sont de longueur $mM$ de sorte que toutes les composantes polyphases sont de même longueur $m$. En reprenant les notations des figures 4 et 5, on déduit les algorithmes de modulation et de démodulation suivants, déjà mentionnés plus haut :

*2.1.1 Algorithme de modulation*

$$x_m^0(n) = c_{m,n} \tag{1}$$

$$x_l^1(n) = \sqrt{2} \sum_{k=0}^{K-1} x_k^0(n) \, e^{-j\frac{2\pi}{K}k\frac{D}{2}} \, e^{j\frac{2\pi}{K}kl} \tag{2}$$

$$\left[ x_0^1(n) \quad \cdots \quad x_{M-1}^1(n) \right] = K\sqrt{2} \ \text{IFFT}\left[ x_0^0(n) \quad \cdots \quad x_{K-1}^0(n) e^{-j\frac{2\pi}{K}(K-1)\frac{D}{2}} \right] \tag{3}$$

$$x_l^2(n) = \sum_{k=0}^{m-1} p[l + kM] x_k^1(n - K_0 k) \tag{4}$$

$$s[k] = \sum_{n=\left\lfloor \frac{k}{M} \right\rfloor - 1}^{\left\lfloor \frac{k}{M} \right\rfloor} x_{k-nM}^2(n) \tag{5}$$

*2.1.2 Algorithme de démodulation*

$$\hat{x}_l^2(n\text{-}a) = s[nN\text{-}b\text{-}l] \tag{6}$$

$$\hat{x}_l^1(n - a) = \sum_{k=0}^{m-1} \breve{p}[l + kM] \hat{x}_l^2(n - a - K_0 k) \tag{7}$$

$$\hat{x}_l^0(n - a) = \sqrt{2} \, e^{-j\frac{2\pi}{K}l\frac{D}{2}} \sum_{k=0}^{K-1} \hat{x}_l^1(n - a) \, e^{j\frac{2\pi}{K}kl} \tag{8}$$

$$\left[ \hat{x}_0^0(n-a) \quad \cdots \quad \hat{x}_{K-1}^0(n-a) \right] = K\sqrt{2} \, e^{-j\frac{2\pi}{K}l\frac{D}{2}} \text{IFFT}\left[ \hat{x}_0^1(n-a) \quad \cdots \quad \hat{x}_{M-1}^1(n-a) \right] \tag{9}$$

$$\hat{c}_{m,n-\alpha} = \hat{x}_m^0(n\text{-}a) \tag{10}$$

**ANNEXE A**

**MODULATIONS MULTIPORTEUSES DE TYPE BFDM/SM**

Dans cette annexe, en guise d'introduction aux modulations BFDM/SM, nous rappelons d'abord quelques définitions essentielles sur la biorthogonalité ([Vetterli et al.95], [Feichtinger et al.98], [Flandrin98]), puis nous définissons précisément ce qu'on entend par modulation BFDM/SM.

Soit **E** un espace vectoriel sur un corps **K,** muni du produit scalaire $\langle \cdot, \cdot \rangle$, et soient $(x_i)_{i \in I}$ et $(\widetilde{x}_{,i})_{i \in I}$ deux familles de vecteurs de **E.** Les définitions et propriétés que nous allons utiliser pour générer une modulation BFDM/SM peuvent se résumer ainsi :

Définition A.1

Les familles $(x_i)_{i \in I}$ et $(\widetilde{x}_{,i})_{i \in I}$ sont biorthogonales si et seulement si :

$$\forall (i, j) \in \mathbf{I}^2, \langle x_i, \widetilde{x}_j \rangle = \delta_{i, j}$$

Définition A.2

Les familles $(x_i)_{i \in I}$ et $(\widetilde{x}_{,i})_{i \in I}$ forment un couple de bases biorthogonales de **E** si et seulement si elles forment chacune une base de **E** et si elles sont biorthogonales.

Propriété A.1

Si $(x_i)_{i \in I}$ et $(\widetilde{x}_{,i})_{i \in I}$ forment un couple de bases biorthogonales de **E**, alors, $\forall x \in$ **E** :

- 
$$x = \sum_{i \in I} \langle x_i, x \rangle \widetilde{x}_i = \sum_{i \in I} \langle \widetilde{x}_i, x \rangle x_i$$

- 
$$\text{si } x = \sum_{i \in I} \alpha_i x_i \text{, alors } \alpha_i = \langle \widetilde{x}_i, x \rangle$$

- 
$$\text{si } x = \sum_{i \in I} \widetilde{\alpha}_i \widetilde{x}_i \text{, alors } \widetilde{\alpha}_i = \langle x_i, x \rangle$$

- 
$$\|x\|^2 = \sum_{i \in I} \langle x_i, x \rangle^* \langle \widetilde{x}_i, x \rangle$$

Nous introduisons maintenant les modulations BFDM/SM continues.

Définition A.3

$s(t)$ est un signal complexe continu de type BFDM/SM, modulé sur K porteuses, si, d'une part, il peut s'écrire sous la forme :

$$s(t) = \sum_{n=-\infty}^{+\infty} \sum_{m=0}^{K-1} c_{m,n} \, \chi_{m,n}(t)$$

avec :

- $c_{m,n} \in \mathbf{C}$ ;

- $\chi_{m,n}(t) = \chi(t - nT_0)\ e^{j2\pi mF_0 t}e^{j\psi_{m,n}}$
- $\chi$ une fonction de support fini : $\chi(t) = 0$ si $t \notin [-T_1, T_2]$ ;
- $F_0T_0 \geq 1$ ($F_0$ et $T_0$ représentent respectivement l'espacement entre porteuses et entre symboles) ;
- $\psi_{m,n}$ un décalage additif de phase quelconque (par exemple $\psi_{m,n} = 0$).

et si, d'autre part, il existe une famille de fonctions $(\widetilde{\chi}_{m,n})_{0 \leq m \leq K-1, n \in \mathbb{Z}}$ biorthogonale à la famille

$$(\chi_{m,n})_{0 \leq m \leq K-1,\, n \in \mathbb{Z}} \ : \ \int_{-\infty}^{+\infty} \chi_{m,n}(t)\widetilde{\chi}_{m',n'}^{\bullet}(t)\ dt = \delta_{m,m'}\delta_{n,n'} \ .$$

Définition A.4

La densité $d$ d'une modulation BFDM/SM est définie par : $d = \dfrac{1}{F_0 T_0}$

Propriété A.2

Les fonctions $\widetilde{\chi}_{m,n}$ s'écrivent sous la forme :

$$\widetilde{\chi}_{m,n}(t) = \widetilde{\chi}(t - nT_0)\ e^{j2\pi mF_0 t}e^{j\psi_{m,n}} \ .$$

Propriété A.3

Le signal BFDM/SM $s(t)$ peut être démodulé par :

$$c_{m,n} = \int_{-\infty}^{+\infty} s(t)\widetilde{\chi}_{m,n}^{*}(t)\ dt$$

Après translation de $T_1$ et échantillonnage à la période $T_e = \dfrac{T_0}{N}$, où $N$ est défini par $d = \dfrac{K}{N}$, il est également possible, de définir des modulations BFDM/SM discrètes.

Définition A.5

$s[k]$ est un signal complexe de type BFDM/SM, modulé sur K porteuses, si, d'une part, il peut s'écrire sous la forme :

$$s[k] = \sum_{n=-\infty}^{+\infty} \sum_{m=0}^{K-1} c_{m,n}\ \chi_{m,n}[k]$$

avec :

- $c_{m,n} \in \mathbf{C}$ ;
- 

$$\chi_{m,n}[k] = \chi[k-nN]\ e^{j\frac{2\pi}{K}mk}e^{j\psi m,n} \ ;$$

- $\chi$ une fonction discrète, causale, et de longueur finie : $\chi[k] = 0$ si $k \notin \{0, ..., L-1\}$;
- $N \geq K$ ;
- $\psi_{m,n}$ un décalage additif de phase quelconque (par exemple $\psi_{m,n} = 0$).

et si, d'autre part, il existe une famille de fonctions $(\widetilde{\chi}_{m,n})_{0 \leq m \leq K-1, n \in \mathbb{Z}}$ biorthogonale à la famille

$$(\chi_{m,n})_{0\leq m\leq K-1,\,n\in\mathbb{Z}} \ : \ \sum_{k=-\infty}^{+\infty} \chi_{m,n}[k]\widetilde{\chi}_{m',n'}^{*}[k] = \delta_{m,m'}\delta_{n,n'}.$$

Propriété A.4

Les fonctions $\widetilde{\chi}_{m,n}$ s'écrivent sous la forme :

$$\widetilde{\chi}_{m,n}[k] = \widetilde{\chi}[k-nN]\,e^{j\frac{2\pi}{K}mk}\,e^{j\psi_{m,n}}.$$

Propriété A.5

Le signal BFDMISM $s(t)$ peut être démodulé par :

$$c_{m,n} = \sum_{k=-\infty}^{+\infty} s[k]\widetilde{\chi}_{m,n}^{*}[k].$$

Définition A.6

$s[k]$ est un signal complexe de type OFDM/SM si, d'une part, c'est un signal de type BFDM/SM, et si, d'autre part, $\widetilde{\chi}[k] = \chi[k]$, c'est-à-dire si $\chi[k]$ définit une base orthonormale $\chi_{m,n}[k]$

Définition A.7

Par extension, on dira qu'une modulation multiporteuse est de type BFDM/SM lorsque :

-   le signal modulé peut s'écrire sous la forme :

$$s[k] = \sum_{n=-\infty}^{+\infty} \sum_{m=0}^{K-1} c_{m,n}\,\chi_{m,n}[k]$$

avec

$$\chi_{m,n}[k]=\chi[k-nN]e^{j\frac{2\pi}{K}mk}\,e^{j\psi m,n};$$

-   et les symboles démodulés sont calculés par :

$$\hat{c}_{m,n} = \sum_{k=-\infty}^{+\infty} s[k]\widetilde{\chi}_{m,n}^{*}[k]$$

avec

$$\widetilde{\chi}_{m,n}[k] = \widetilde{\chi}[k-nN]\,e^{j\frac{2\pi}{K}mk}\,e^{j\psi_{m,n}}.$$

En particulier, on pourra avoir affaire à une modulation du type BFDM/SM même si $(\chi_{m,n})_{0\leq m\leq K-1,\,n\in\mathbb{Z}}$ et $(\widetilde{\chi}_{m,n})_{0\leq m\leq K-1,\,n\in\mathbb{Z}}$ ne sont pas biorthogonales. On ne se restreint donc pas aux seuls systèmes parfaitement biorthogonaux.

De la même façon, on dira qu'une modulation multiporteuse est du type OFDM/SM si elle est du type BFDM/SM (au sens qui vient d'être défini) et si $\tilde{\chi}[k] = \chi[k]$, même si cela ne définit pas une base $\chi_{m,n}[k]$ orthonormale.

**ANNEXE B**

**LE TRANSMULTIPLEXEUR BFDM/SM**

Dans cette annexe, nous montrons comment un système de modulation BFDM/SM discret peut être réalisé sous la forme d'un transmultiplexeur.

Définition B.1

Soit $s[k]$ un signal complexe de type BFDM/SM, modulé sur $K$ porteuses de densité $d$ (cf. définition A.5). On définit $p$ le prototype de modulation associé par $\chi[k]=\sqrt{2}\ p[k]$, et on note $L_p$ sa longueur.

Muni de la définition B.1, on peut réécrire $s[k]$ sous la forme :

$$s[k] = \sqrt{2} \sum_{n=-\infty}^{+\infty} \sum_{m=0}^{K-1} c_{m,n}\ p[k-nN]\ e^{j\frac{2\pi}{K}mk}\ e^{j\psi_{m,n}} \qquad (11)$$

Alors, en définissant $D$ un paramètre entier et en posant :

$$\psi_{m,n} = -\frac{2\pi}{K}m\left(nN+\frac{D}{2}\right), \qquad (12)$$

$$f_m(k) = \sqrt{2}p[k]\ e^{j\frac{2\pi}{K}m\left(k-\frac{D}{2}\right)}\ , \qquad (13)$$

on obtient :

$$\chi_{m,n}[k] = \sqrt{2}p[k-nN]\ e^{j\frac{2\pi}{K}m\left(k-nN-\frac{D}{2}\right)} = f_m(k-nN) \qquad (14)$$

et

$$s[k] = \sum_{n=-\infty}^{+\infty}\ \sum_{m=0}^{K-1} c_{m,n}f_m(k-nN)\ . \qquad (15)$$

Nous nous intéressons maintenant à l'étape de démodulation :

Définition B.2

Soit $s[k]$ un signal complexe de type BFDM/SM, modulé sur $K$ porteuses de densité $d$ (cf. définition A.5). On définit $\check{p}$ le prototype de démodulation associé par $\tilde{\chi}^*[k] = \sqrt{2}\ \check{p}[D-k]$, et on note $L_{\check{p}}$ sa longueur.

En posant :

$$h_m(k) = \sqrt{2}\check{p}[k]\ e^{j\frac{2\pi}{K}m\left(k-\frac{D}{2}\right)} \qquad (16)$$

et en utilisant la définition B.2 et les développements précédents on obtient alors :

$$\widetilde{\chi}_{m,n}[k] = \sqrt{2}\,\breve{p}^{*}[D-k+nN]\,e^{j\frac{2\pi}{K}\widetilde{m}\left(k-nN-\frac{D}{2}\right)} = \hat{h}_{m}^{*}(D-K+nN) \qquad (17)$$

et

$$c_{m,n} = \sum_{k=-\infty}^{+\infty} h_{m}(D-K+nN)\,s[k] = \sum_{k=-\infty}^{+\infty} h_{m}(k)\,s[D-k+nN]\,. \qquad (18)$$

Si, maintenant, on note $D = aN - b$ avec $a$ et $b$ deux entiers positifs et $0 \le b \le N$ -1, alors on peut écrire :

$$c_{m,n-a} = \sum_{k=0}^{L_{\breve{p}}-1} h_{m}(k)\,s[nN-k-b]\,. \qquad (19)$$

Les équations (15) et (19) permettent alors d'obtenir le transmultiplexeur représenté figure 1, pour lequel $F_{m}(z)$ et $H_{m}(z)$ correspondent respectivement aux transformées en $z$ de $f_{m}(k)$ et $h_{m}(k)$.

**ANNEXE C**

**SCHÉMAS DE RÉALISATION**

La réalisation d'un modem BFDM/SM selon la figure 1 serait extrêmement coûteuse en termes de complexité opératoire. C'est pourquoi, dans cette annexe, nous montrons comment réaliser un modem BFDM/SM de faible complexité opératoire.

Posons tout d'abord pour simplifier les écritures :

$$\omega_{K} = e^{-j\frac{2\pi}{K}}, \qquad (20)$$

alors :

$$F_{k}(z) = \sqrt{2}\,\omega_{K}^{k\frac{D}{2}}\,P(z\omega_{K}^{k}), \qquad (21)$$

$$H_{k}(z) = \sqrt{2}\,\omega_{K}^{k\frac{D}{2}}\,\breve{P}\left(z\omega_{K}^{k}\right). \qquad (22)$$

Définissons aussi $M$ le PPCM de $N$ et $de\ K$ :

$$M = N_{0}K = NK_{0}. \qquad (23)$$

Écrivons maintenant $F_{k}(z)$ et $H_{k}(z)$ en fonction de leurs $M$ composantes polyphases [Vaidyanathan93] (décomposition de type II et I respectivement) :

$$F_{k}(z) = \sum_{l=0}^{M-1} z^{-(M-1-l)} R_{l,k}\left(z^{M}\right), \qquad (24)$$

$$H_k(z) = \sum_{l=0}^{M-1} z^{-l} E_{k,l}\left(z^M\right). \tag{25}$$

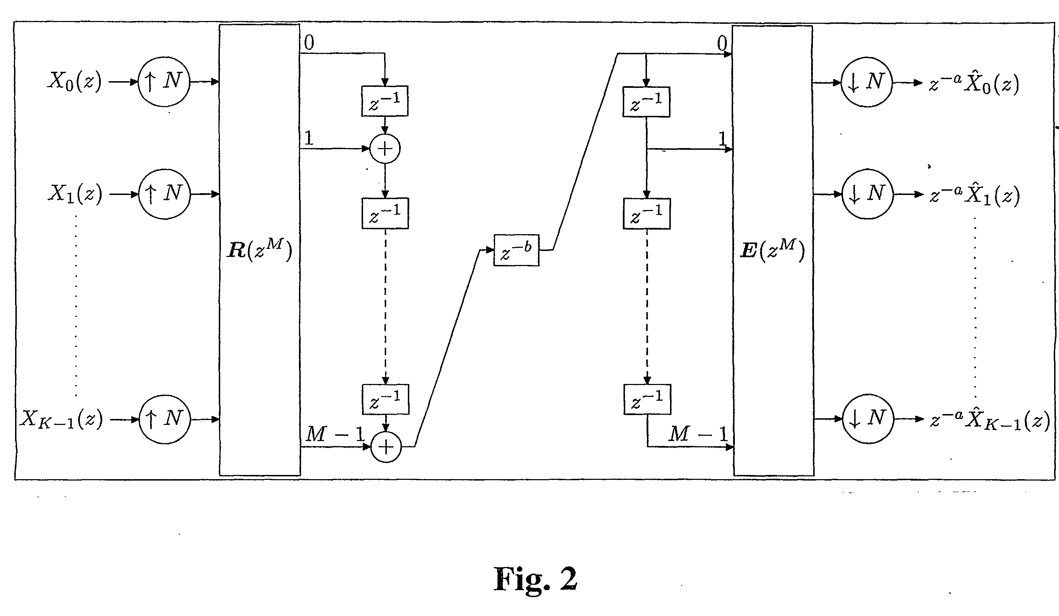

En notant $R(z)$ et $E(z)$ les matrices polyphases de taille $M \times K$ et $K \times M$ respectivement et définies par $[R]_{l,k}(z)$ = $R_{l,k}(z)$ et $[E]_{k,l}(z) = E_{k,l}(z)$, on obtient un schéma équivalent représenté figure 2. Ce schéma est lui-même équivalent à la figure 3.

Utilisons maintenant les décompositions polyphases des prototypes d'émission et de réception :

$$P(z) = \sum_{l=0}^{M-1} z^{-l} G_l\left(z^M\right), \tag{26}$$

$$\breve{P}(z) = \sum_{l=0}^{M-1} z^{-l} \breve{G}_l\left(z^M\right), \tag{27}$$

avec :

$$G_l(z) = \sum_n p[l + nM] z^{-n} , \tag{28}$$

$$\breve{G}_l(z) = \sum_n \breve{p}[l + nM] z^{-n} , \tag{29}$$

il en découle que :

$$F_k(z) = \sqrt{2} \omega_K^{k\frac{D}{2}} \sum_{l=0}^{M-1} z^{-l} \omega_K^{-kl} G_l\left(z^M\right), \tag{30}$$

$$H_k(z) = \sqrt{2} \omega_K^{k\frac{D}{2}} \sum_{l=0}^{M-1} z^{-l} \omega_K^{-kl} \breve{G}_l\left(z^M\right), \tag{31}$$

d'où :

$$R_{l,k}(z) = \sqrt{2} \omega_K^{-k(M-1-l)} \omega_K^{k\frac{D}{2}} G_{M-1-l}(z), \tag{32}$$

$$E_{k,l}(z) = \sqrt{2} \omega_K^{-kl} \omega_K^{k\frac{D}{2}} \breve{G}_l(z). \tag{33}$$

Posons maintenant :

$$\mathbf{W}_{\text{diag}} = \begin{pmatrix} 1 & & & 0 \\ & e^{-j\frac{2\pi}{K}\frac{D}{2}} & & \\ & & \ddots & \\ 0 & & & e^{-j\frac{2\pi}{K}(K-1)\frac{D}{2}} \end{pmatrix}, \qquad\qquad (34)$$

$$\mathbf{J}_M = \begin{pmatrix} 0 & \cdots & 1 \\ \vdots & \ddots & \vdots \\ 1 & \cdots & 0 \end{pmatrix}, \qquad\qquad (35)$$

$\mathbf{W}_{K \times M}$ la matrice de la transformée de Fourier discrète de taille $K \times M$ : et $\mathbf{G}_{\text{diag}}(z)$ et $\check{G}_{l\text{diag}}(z)$ les matrices diagonales de taille $M$ :

En utilisant les équations (32) à (33) on obtient :

$$R(z) = \left[\sqrt{2}\,W_{\text{diag}}^{-\frac{D}{2}}\,W_{K \times M}^{*}\,G_{\text{diag}}(z)^{\mathsf{J}}\right]^{\mathsf{T}} \qquad\qquad (39)$$

$$\mathbf{E}(z) = \sqrt{2}\,\mathbf{W}_{\text{diag}}^{\frac{-D}{2}}\,\mathbf{W}_{K \times M}\,\check{\mathbf{G}}_{\text{diag}}(z) \qquad\qquad (40)$$

Les équations (39) et (40) permettent alors d'aboutir respectivement aux schémas de réalisation à base de transformées de Fourier inverses du modulateur (figure 4) et du démodulateur représenté (figure 5).

Il est à noter que dans le cas particulier où $D = mM$ - 1, avec $m$ un entier positif non nul, on peut aussi réaliser le modulateur et le démodulateur à l'aide de transformées de Fourier directe. En effet, dans ce cas, d'après l'équation (32) :

$$R_{l,k}(z) = \sqrt{2}\,\omega_K^{-k(M-1-l)}\,\omega_K^{k\frac{mM-1}{2}}\,G_{M-1-l}(z) = \sqrt{2}\,\omega_K^{kl}\,\omega_K^{-k\frac{mM-1}{2}}\,G_{M-1-l}(z)$$

$$E_{k,l}(z) = \sqrt{2}\,\omega_K^{-kl}\,\omega_K^{k\frac{mM-1}{2}}\,\check{G}_l(z) = \sqrt{2}\,\omega_K^{k(M-1-l)}\,\omega_K^{-k\frac{mM-1}{2}}\,\check{G}_l(z)$$

D'où, en notant :

$$\mathbf{G}_{\text{diagr}}(z) = \begin{pmatrix} G_{M-1}(z) & & 0 \\ & \ddots & \\ 0 & & G_0(z) \end{pmatrix}$$

$$\check{\mathbf{G}}_{\text{diagr}}(z) = \begin{pmatrix} \check{G}_{M-1}(z) & & 0 \\ & \ddots & \\ 0 & & \check{G}_0(z) \end{pmatrix}$$

on obtient:

$$R(z) = [\sqrt{2}W_{\text{diag}}^{-\frac{D}{2}}W_{K\times M}G_{\text{diagr}}(z)]^T$$

$$E_{k,l}(z) = \sqrt{2}\omega_K^{-kl}\omega_K^{k\frac{mM-1}{2}}\breve{G}_l(z) = \sqrt{2}\omega_K^{k(M-1-l)}\omega_K^{-k\frac{mM-1}{2}}\breve{G}_l(z)$$

D'où les figures 4-bis et 5-bis.

**ANNEXE D**

**RELATION ENTRÉE-SORTIE**

Notons $\mathbf{X}(z)$ et $\hat{X}(z)$ les vecteurs correspondant aux données d'entrée et de sortie respectivement :

$$X(z) = [X_0(z) \cdots X_{K-1}(z)]^T , \tag{41}$$

$$\hat{X}(z) = [\hat{X}_0(z) \dots \hat{X}_{K-1}(z)]^T , \tag{42}$$

avec $X_m(z)$ et $\hat{X}_m(z)$ les transformées en $z$ de $x_m(n)$ et $\hat{x}_m(n)$ respectivement. En utilisant la figure 3, on obtient alors :

$$z^{-a}\hat{X}(z) = E(z^{K_o})\Delta_b(z)R(z^{K_o})X(z). \tag{43}$$

Nous pouvons maintenant calculer $\mathbf{T}(z)$ la matrice de transfert du transmultiplexeur :

$$\hat{X}(z) = T(z)X(z). \tag{44}$$

Des équations (39), (40) et (43), on déduit :

$$\mathbf{T}(z) = 2z^a \mathbf{W}_{diag}^{\frac{D}{2}} \mathbf{W}_{K\times M}^* \underbrace{\breve{\mathbf{G}}_{diag}(z^{K_o})\Delta_b(z)\mathbf{J}_M\mathbf{G}_{diag}(z^{K_o})}_{\mathbf{U}_b(z)}\mathbf{W}_{K\times M}^{*T}\mathbf{W}_{diag}^{\frac{D}{2}} \tag{45}$$

Calculons maintenant $\Delta_b(z)$. Si on place un opérateur de délai $Z^{-n}$ entre un expanseur et un décimateur d'ordre $N$, on obtient un circuit ouvert si $n$ n'est pas multiple de $N$ ou un opérateur de délai $z^{\frac{n}{N}}$ si $n$ est un multiple de $N$ (cf. figure 6). Or la composante $[\Delta_b]_{l,l'}(z)$ de $\Delta_b(z)$ de coordonnées $l$, $l'$ s'identifie à un délai $z^{-(M-1-l'+b+l)}$ placé entre un expanseur et un décimateur d'ordre $N$ (cf. figure 7). Il en découle que :

$$[\Delta_b]_{l,l'}(z) = z^{\frac{M-1-l'+b+l}{N}} d_{l-l'+b-l,N,} \tag{46}$$

avec $d_{m,n}$ défini pour tout couple d'entiers $(m,n)$ par :

$$d_{m,n} = \begin{cases} 1 & \text{si } m \text{ est un multiple de } n, \\ 0 & \text{sinon.} \end{cases} \tag{47}$$

Après calculs on obtient finalement que, pour $0 \le l, l' \le M-1$ :

$$[\mathbf{U}_b]_{l,l'}(z) = z^{-\frac{l+l'+b}{N}} \breve{G}_l(z^{K_0}) \, G_{l'}(z^{K_0}) \, d_{l+l'+b,N} \, , \tag{48}$$

$$[\mathbf{T}]_{k,k'}(z) = 2z^a \omega_K^{(k+k')\frac{D}{2}} \sum_{l,l'=0}^{M-1} z^{-\frac{l+l'+b}{N}} \omega_K^{-(kl+k'l')} \breve{G}_l(z^{K_0}) \, G_{l'}(z^{K_0}) \, d_{l+l'+b,N} \, . \tag{49}$$

Pour simplifier ces expressions, notons :

$$\Lambda_b = \begin{cases} \{0, \cdots, K_0 - 1\} & \text{si } b = 0, \\ \{1, \cdots, K_0\} & \text{sinon,} \end{cases} \tag{50}$$

et posons pour $\lambda \in \Lambda_b$ :

$$U_l^\lambda(z) = \begin{cases} z^{-\lambda} \breve{G}_l(z^{K_0}) \, G_{\lambda N - b - l}(z^{K_0}) & \text{si } 0 \le l \le \lambda N - b, \\ z^{-(\lambda + K_0)} \breve{G}_l(z^{K_0}) \, G_{(\lambda + K_0)N - b - l}(z^{K_0}) & \text{si } \lambda N - b + 1 \le l \le M - 1. \end{cases} \tag{51}$$

On obtient alors :

$$[\mathbf{T}]_{k,k'}(z) = 2z^a \omega_K^{(k+k')\frac{D}{2}+bk'} \sum_{\lambda \in \Lambda_b} \omega_K^{-k'\lambda N} \sum_{l=0}^{M-1} \omega_K^{-l(k-k')} U_l^\lambda(z). \tag{52}$$

**ANNEXE E**

**CONDITIONS DE BIORTHOGONALITÉ**

<u>1 - Cas général</u>

Le système est biorthogonal lorsqu'il permet de retrouver exactement en réception les symboles émis, i.e. lorsque :

$$T(z) = I_K. \tag{53}$$

Lorsque cet objectif est atteint, on dit aussi que le système est à reconstruction parfaite (RP) par analogie avec les bancs de filtres. Ainsi, en utilisant l'équation (45), le système est RP pour:

$$W_{K \times M}^T \, W_{K \times M}^* \, U_b(z) \, W_{K \times M}^{*T} \, W_{K \times M} = \frac{1}{2} z^{-a} \, W_{K \times M}^T \, W_{\text{diag}}^{-D} \, W_{K \times M} \, . \tag{54}$$

Or, on a, pour $0 \le l, l' \le M$-1 :

$$\left[W_{K \times M}^T \, W_{K \times M}^*\right]_{l,l'} = \sum_{k=0}^{K-1} \omega_K^{k(l-l')} = K \, d_{l-l',K} \, , \tag{55}$$

$$\left[\mathbf{W}_{K\times M}^{T}\,\mathbf{W}_{\text{diag}}^{-D}\,\mathbf{W}_{K\times M}\right]_{l,l'} = \sum_{k=0}^{K-1}\omega_{K}^{k(l+l'-D)} = \sum_{k=0}^{K-1}\omega_{K}^{k(l+l'+b)} = K\,d_{l+l'+b,K}. \qquad (56)$$

Ainsi, les conditions de reconstruction parfaite s'écrivent pour $0 \le l,\, l' \le M\text{-}1$ :

$$\sum_{l_1,l_2=0}^{M-1} z^{-\frac{l_1+l_2+b}{N}}\,\breve{G}_{l_1}(z)G_{l_2}(z)d_{l-l_1,K}d_{l'-l_2,K}d_{l_1+l_2+b,N} = \frac{z^{-a}}{2K}d_{l+l'-D,K}\,, \qquad (57)$$

soit :

$$\sum_{\lambda\in\bar{E}_b}\sum_{l_1=0}^{M-1}U_{l_1}^{\lambda}(z)d_{l-l_1,K}d_{l'+l_1+b-\lambda N,K} = \frac{z^{-a}}{2K}d_{l+l'-D,K}\,, \qquad\qquad (58)$$

avec $\Lambda_b$ et $U^{\lambda}{}_l(z)$ définis en annexe D par les équations (50) et (51).

On voit donc qu'on obtient deux types de relations selon que $l+l'-D$ est multiple de $K$ ou non :

- si $l + l'\text{-}D$ est multiple de $K$ :

$$d_{l'+l_1+b-\lambda N,K} = d_{l-l_1+(\lambda-a)N,K}, \qquad\qquad (59)$$

et

$$d_{l-l_1,K}d_{l'+l_1+b-\lambda N,K} = d_{l-l_1,k}d_{\lambda-a)N,K} = d_{l-l_1,k}d_{(\lambda-a)N_o,K_o} \qquad\qquad (60)$$

$= d_{l-l_1,K}d_{\lambda-a,K_o}$

D'où, avec $\lambda_0$ l'unique élément de $\Lambda_b$ congru à $a$ module $K_0$ :

$$\sum_{l_1=0}^{M-1}U_{l_1}^{\lambda_0}(z)d_{l-l_1,K} = \frac{z^{-a}}{2K}\,, \qquad\qquad (61)$$

soit pour $0 \le l \le K - 1$ :

$$\sum_{q=0}^{N_o-1}U_{nK+l}^{\lambda_0}(z) = \frac{z^{-a}}{2K}\,\, ; \qquad\qquad (62)$$

- si $l+l'\text{-}D$ n'est pas multiple de $K$, le même raisonnement aboutit à :

$$\sum_{q=0}^{N_0-1}U_{nK+l}^{\lambda}(z) = 0\,, \qquad\qquad (63)$$

pour tout $\lambda$ élément de $\Lambda_b$ différent de $\lambda_0$ et pour $0 \le l \le K - 1$.

Définissons maintenant les entiers $s$ et $d$ $(0 \le d \le M\text{-}1)$ par :

$$s = \frac{a - \lambda_0}{K_0}, \tag{65}$$

$$d = \lambda_0 N - b, \tag{66}$$

notons aussi :

$$n_{l,\lambda} = \left\lfloor \frac{\lambda N - b - l}{K} \right\rfloor. \tag{67}$$

Finalement, les condition de reconstruction parfaites peuvent se résumer à:

$$\sum_{n=0}^{n_{l,\lambda}} \breve{G}_{nK+l}(z) G_{\lambda N - b - (nK+l)}(z) + z^{-1} \sum_{n=n_{l,\lambda}+1}^{N_0-1} \breve{G}_{nK+l}(z) G_{M+\lambda N - b - (nK+l)}(z) = \frac{z^{-s}}{2K} d_{\lambda - a, K_0}. \tag{68}$$

### 2 - Cas particulier où $N$ est un multiple de $K$

Lorsque $N$ est un multiple de $K$, on a $M = N$ et $K_0 = 1$. Ainsi, en utilisant (66), les conditions de reconstruction parfaite se réduisent à :

$$\sum_{n=0}^{n_l} \breve{G}_{nK+l}(z) G_{d - (nK+l)}(z) + z^{-1} \sum_{n=n_l+1}^{N_0-1} \breve{G}_{nK+l}(z) G_{M+d - (nK+l)}(z) = \frac{z^{-s}}{2K}, \tag{69}$$

avec :

$$n_l = \left\lfloor \frac{d - l}{K} \right\rfloor. \tag{70}$$

### 3 - Cas particulier où $N = 2K$ (système de densité ½)

Lorsque $P = \breve{p}$, en observant les conditions de reconstruction parfaite d'un système BFDM/OM à $4K$ porteuses (cf. [Siclet99]), on déduit de (69) que $P$ permet de construire un système BFDM/SM de densité ½ à $K$ porteuses si et seulement s'il permet de construire un système BFDM/OM à $4K$ porteuses.

Si $P \neq \breve{p}$, on peut montrer que si le couple ($P$, $\breve{p}$) permet de construire un système BFDM/OM à $4K$ porteuses, alors il permet aussi de construire un système BFDM/SM de densité ½ à $K$ porteuses.

On peut aussi établir la même relation entre les bancs de filtres modulés en cosinus (DCT-IV et DCT-II) à $2K$ sous-bandes, ou complexes (MDFT-I et MDFT-II) à $4K$ sous-bandes, et les systèmes BFDM/SM de densité ½ à $K$ porteuses. Il suffit pour cela d'observer les conditions de reconstruction parfaite de chacun de ces systèmes. Celles-ci sont données dans [Heller et al.99] en ce qui concerne les bancs de filtres précédents.

### 4 - Système OFDM/SM

Le système est orthogonal lorsque $\tilde{\chi}[k] = \chi[k]$ (cf. définition A.6). Pour garder des prototypes causaux, on a donc $L = L_p = L_{\breve{p}}$ et $\breve{p}[k] = p^*[L - 1 - k]$ et $D = L - 1.$, avec $p^*[k]$ le conjugué de $p[k]$.

En notant $G_l^*(z)$ le polynôme en $z$ dont les coefficients sont les conjugués de ceux de $G_l(z)$ et $\tilde{G}_l(z) = G_l^*(z^{-1})$, on peut montrer qu'un système OFDM/SM est parfaitement orthogonal si et seulement si, $\forall l \in \{0, \cdots, K - 1\}$ et $\forall \lambda \in \Lambda_b$ :

$$\sum_{n=0}^{N_0-1} z^{a_{\lambda,nK+l}} \breve{G}_{nK+l}(z)\, \widetilde{\breve{G}}_{nK+l+(a_\lambda+a_{\lambda,nK+l}K_0)N}(z) = \frac{\delta_{a_\lambda,0}}{2K} \qquad (71)$$

avec :

$$a_\lambda = \left\lfloor \frac{a-\lambda}{K_0} \right\rfloor \qquad (72)$$

et :

$$\hat{a}_{\lambda,k} = \begin{cases} 0 & \text{si } 0 \le k + a_\lambda N \le M-1; \\ -1 & \text{sinon.} \end{cases} \qquad (73)$$

5 - Équivalence avec les bancs de filtres modulés complexes

Il existe une dualité entre bancs de filtres et transmultiplexeurs ([Hleiss et al.97], [Hleiss00]). Ainsi, un couple de prototypes $(P, \breve{P})$ est biorthogonal vis-à-vis d'un système BFDM/SM à $K$ porteuses de densité $K/N$, si et seulement s'il est biorthogonal vis-à-vis d'un banc de filtres modulé complexe à $N$ branches et de densité $N/K$.

**ANNEXE F**

**RÉFÉRENCES**

| | |
|---|---|
| [Bölcskei et al.98] | H. BÖLCSKEI et F. HLAWATSCH.-Oversampled cosine modulated filter banks with perfect reconstruction. - *IEEE Transactions on Circuit and Systems-II: Analog and Digital Signal Processing*, vol. 4, n° 8, août 1998, pp. 1057-1071. |
| [Feichtinger et al.98] | H. G. FEICHTINGER et T. STROHMER (édité *par*). - *Gabor analysis and algorithms*. - Boston, Birkhäuser, 1998. ISBN 0-9176-3959-4 - ISBN 3-7643-3959-4. |
| [Flandrin98] | P. FLANDRIN. - Temps-fréquence. Paris, Hermès, 1998. ISBN 2-86601-700-5. |
| [Heller et al.99] | P. N. HELLER, T. KARP et T. Q. NGUYEN. - A general formulation of modulated filter banks. - *IEEE Transactions on Signal Processing,* vol. 47, n° 4, avril 1999, pp.986-1002. |
| [Hleiss et al.97] | R. HLEISS, P. DUHAMEL et M. CHARBIT. - Oversampled OFDM systems. *Proc. Int. Conf. On Digital Signal Processing*. Santorin, Grèce, juillet 1997. |
| [Hleiss00] | R. HLEISS. - *Conception et égalisation de nouvelles structures de modulations multiporteuses*. - Thèse de l'École Nationale Supérieure des Télécommunications, 2000. |
| [Lacroix-Penther et al.99] | D. LACROIX-PENTHER et D. CASTELAIN. - À propos de l'utilisation du COFDM pour les réseaux locaux sans fil haut débit. - *Proc. GRETSI.* - Vannes, France, septembre 1999. |
| [Kozek et al.98] | W. KOZEK, A. F. MOLISCH et E. BONEK. - Pulse design for robust multicarrier transmission over doubly dispersive channels. *Proc. Int. Conf. On Telecommunications*, pp. 313-317. Porto Carras, Grèce, juin 1998. |
| [Pommier et al.86] | D. POMMIER et Y. WU. - Interleaving of spectrum-spreading in digital radio intended for vehicles. - *EBU Rev.-Tech.,* n° 217, juin 1986, pp. 128-142. |
| [Sari et al.95] | H. SARI, G. KARAM, I. JEANCLAUDE. Transmission techniques for digital terrestrial TV broadcasting. - IEEE Communications Magazine, vol. 33, n° 2, février 1995, pp. 100-109. |
| [Siclet99] | C. SICLET. - *Études des modulations multiporteuses biorthogonales de type BFDM/OQAM*. - Rapport de DEA, École Nationale Supérieure des Télécommunications de Bretagne, 1999. |
| [Siohan et al.99] | P. SIOHAN et C. SICLET. - *Procédé de transmission d'un signal BFDM/OQAM, procédés de modulation et de démodulation correspondants*. - Demande de brevet n° 99 112371, |

septembre 1999.

[Vaidyanathan93]    P. P. VAIDYANATHAN. - *Multirate systems and filter banks*. - Englewood Cliffs, Prentice Hall, 1993. ISBN 0-9614088-7-1.

[Vandendorpe et al.98]    L. VANDENDORPE, L. CUVELIER, F. DERYCK, J. LOUVEAUX et O. van de WIEL. - Fractionnaly spaced linear and decision feedback detectors for transmultiplexers. *IEEE Transactions on Signal Processing,* vol. 46, n° 4, avril 1998,pp.996-1011.

[Vetterli et al.95]    M. VETTERLI et J. KOVACEVIC.-*Wavelets and subband coding.*-Englewood Cliffs, Prentice Hall, 1995. ISBN 0-13-097080-8.

**Revendications**

1. Procédé de transmission et de réception d'un signal multiporteuse biorthogonal multiplexé par division en fréquence associé à des porteuses modulées de façon synchrone, désigné ci-après sous le nom de BFDM/SM, mettant en oeuvre :

   - une étape de modulation dudit signal, à l'aide d'un banc de filtres de synthèse (11),
   - une étape de démodulation dudit signal, à l'aide d'un banc de filtres d'analyse (12), lesdits bancs de filtres formant une structure de transmultiplexeur, et
   - une étape d'application d'un retard (13) de durée prédéterminée aux symboles modulés délivrés par ledit banc de filtres de synthèse,

   **caractérisé en ce qu'**il comprend une étape de regroupement des moyens de filtrage dudit banc de filtres de synthèse (11) et dudit banc de filtres d'analyse (12) respectivement sous la forme d'une matrice polyphase à $K$ entrées et $M$ sorties, en émission, et d'une matrice polyphase à $M$ entrées et $K$ sorties, en réception,
       K étant le nombre de porteuses dudit signal multiporteuse et $M$ le plus petit commun multiple de $K$ et $N$, où $N$ est l'ordre d'un expanseur dans l'étape de modulation et d'un décimateur dans l'étape de démodulation et est choisi strictement supérieur à $K$.

2. Procédé de transmission et de réception selon la revendication 1
   **caractérisé en ce que** ledit retard (13) présente une durée de b fois la durée d'un desdits symboles modulés, b étant un nombre entier supérieur à 1.

3. Procédé de transmission et de réception selon l'une quelconque des revendications 1 et 2, **caractérisé en ce qu'**il comprend les étapes suivantes :

   - modulation, à l'aide d'un banc de filtres de synthèse (11), présentant $K$ branches parallèles, $K \geq 2$, alimentées chacune par des données source, et comprenant chacune un expanseur d'ordre $N > K$ et des moyens de filtrage ;
   - application d'un retard de reconstruction (13) des symboles modulés, délivrés par ledit banc de filtres de synthèse, à l'aide d'un opérateur délai sur une ligne de transmission alimentée par ledit banc de filtres de synthèse ;
   - démodulation, à l'aide d'un banc de filtres d'analyse (12), présentant $K$ branches parallèles, comprenant chacune un décimateur d'ordre $N$ et des moyens de filtrage, et délivrant des données reçues représentatives desdites données source,
   lesdits moyens de filtrage étant déduits d'une fonction de modulation prototype prédéterminée.

4. Procédé de transmission et de réception selon la revendication 3,
   **caractérisé en ce que** b est strictement inférieur à $N$.

5. Procédé de transmission et de réception selon l'une quelconque des revendications 2 à 4, **caractérisé en ce que** ledit entier b tient compte :

   - d'un délai introduit par la structure biorthogonale dudit signal ;
   - de la fonction de filtrage biorthogonal appliquée à chaque échantillon.

6. Procédé de transmission et de réception selon la revendication 5,
   **caractérisé en ce que** b = a$N$-D, où :

*D* est un paramètre entier tel que :

$$\psi_{m,n} = -\frac{2\pi}{K}.m(nN + \frac{D}{2})$$

*m,n* : indices en temps et en fréquence des symboles ;
$\psi_{m,n}$ : décalage de phase additif appliqué à la fonction de filtrage du symbole indicé.

a est un entier représentant un retard de reconstruction correspondant au nombre de symbole de retard entre l'une séquence émise et une séquence reçue qui lui correspond exactement.

7. Procédé de transmission et de réception selon l'une quelconque des revendications 1 à 6, **caractérisé en ce qu'**au moins une desdites matrices polyphases comprend une transformée de Fourier inverse (41, 51).

8. Procédé de transmission et de réception selon l'une quelconque des revendications 1 à 7, **caractérisé en ce que** lesdits filtres de synthèse et lesdits filtres d'analyse sont construits à partir de filtres prototypes respectant la condition suivante :

$$\sum_{n=0}^{n_{l,\lambda}} \breve{G}_{nK+l}(z)G_{\lambda N-b-(nK+l)}(z) + z^{-1}\sum_{n=n_{l,\lambda}+1}^{N_0-1} \breve{G}_{nK+l}(z)G_{M+\lambda N-b-(nK+l)}(z) = \frac{z^{-s}}{2K}d_{\lambda-a,K_0} \quad (68)$$

avec

*a* entier présentant le retard de reconstruction ;
*b* entier compris entre 0 et N-1 ;

$$M = K_0 N = N_0 K;$$

*l* entier, $0 \leq l \leq M-1$ ;

$$\lambda \in \Lambda_b, \text{ avec } \Lambda_b = \begin{cases} \{0,..,K_0-1\} & \text{si b = 0} \\ \{1,..,K_0\} & \text{sinon} \end{cases}$$

$\lambda_0$ unique élément de $\Lambda_b$ congru à *a* modulo $K_0$ ;

$$d_{m,n} = \begin{cases} 1 & \text{si } m \text{ est un multiple de } n \\ 0 & \text{sinon} \end{cases},$$

$$s = \frac{a-\lambda_0}{K_0} ;$$

$$n_{l,k} = \left\lfloor \frac{\lambda N - b - l}{K} \right\rfloor ;$$

$$G_l(z) = \sum_n p[l+nM]z^{-n}$$

avec $p[k]$ une fonction discrète, causale, de support fini, appelée prototype de modulation ;

$$\check{G}_l(z) = \sum_n \check{p}[l + nM]z^{-n},$$

avec $\check{p}[k]$ une fonction discrète, causale, de support fini, appelée prototype de démodulation.

**9.** Procédé de transmission et de réception selon la revendication 8,
**caractérisé en ce que** $N$ est un multiple de $K,$ et **en ce que** lesdits filtres prototypes respectent la condition suivante :

$$\sum_{n=0}^{n_l} \check{G}_{nK+l}(z)G_{d-(nK+l)}(z) + z^{-1}\sum_{n=n_l+1}^{N_0-1} \check{G}_{nK+l}(z)G_{M+d-(nK+l)}(z) = \frac{z^{-s}}{2K} \tag{69}$$

- $d = \lambda_0 N - b$ ;

- $$n_l = \left\lfloor \frac{d-l}{K} \right\rfloor$$

**10.** Procédé de transmission et de réception selon l'une quelconque des revendications 8 et 9, **caractérisé en ce que** ledit signal multiporteuse est de type orthogonal multiplexé par division en fréquences associé à des porteuses modulées de façon synchrone, OFDM/SM, et **en ce que** lesdits filtres prototypes respectent la condition suivante :

$$\sum_{n=0}^{N_0-1} z^{a_{\lambda,nK+l}} \check{G}_{nK+l}(z)\tilde{\check{G}}_{nK+l+(a_\lambda+a_{\lambda,nK+l}K_0)N}(z) = \frac{\delta_{a\lambda,0}}{2K} \tag{71}$$

$$\tilde{G}_l(z) = G_l^*(z) ;$$

$$a_\lambda = \left\lfloor \frac{a-\lambda}{K_0} \right\rfloor ;$$

$$a_{\lambda,k} = \begin{cases} 0 & \text{si } 0 \le k + a_\lambda N \le M - 1 ; \\ -1 & \text{sinon} \end{cases}$$

**11.** Procédé de modulation d'un signal transmis selon le procédé de l'une quelconque des revendications 1 à 10, **caractérisé en ce qu'**il met en oeuvre une transformée de Fourier inverse (41) alimentée par $K$ données source ayant chacune subie un décalage de phase prédéterminée, et alimentant $M$ modules de filtrage, suivis chacun d'un expanseur d'ordre $N,$ dont les sorties sont regroupées puis transmises, avec $M$ le plus petit commun multiple de $N$ et de $K$.

**12.** Procédé de modulation selon la revendication 11, **caractérisé en ce qu'**il délivre des données $s[k]$ telles que :

$$x_m^0(n) = c_{m,n}$$

$$x_l^1(n) = \sqrt{2}\sum_{k=0}^{K-1} x_k^0(n)e^{-j\frac{2\pi}{K}k\frac{D}{2}}e^{j\frac{2\pi}{K}kl}$$

$$\left[x_0^1(n) \quad \cdots \quad x_{M-1}^1(n)\right] = k\sqrt{2}\,IFFT\left[x_0^0(n) \quad \cdots \quad {}_{k-1}^0(n)e^{-j\frac{2\pi}{k}(k-1)\frac{D}{2}}\right]$$

$$x_l^2(n) = \sum_k p[l+kM]x_k^1(n-K_0k)$$

$$s[k] = \sum_{n=\left\lfloor\frac{k}{M}\right\rfloor - 1}^{\left\lfloor\frac{k}{M}\right\rfloor} x_{k-nM}^2(n)$$

où $c_{m,n}$ correspond aux symboles complexes à transmettre,
*avec m* et *n* les indices en temps et en fréquence des symboles ;
et

$$D = aN - b,$$

*avec*

> *a* entier présentant le retard de reconstruction ;
> *b* entier compris entre 0 et *N*- 1 ;

et $\lfloor \cdot \rfloor$ est la fonction « partie entière »,
et

$$M = K_0N = N_0K,$$

et *p[k]* une fonction discrète, causale, de support fini, appelée prototype de modulation.

**13.** Procédé de démodulation d'un signal transmis selon le procédé de transmission selon l'une quelconque des revendications 1 à 10 **caractérisé en ce qu'**il met en oeuvre une transformée de Fourier inverse (51) alimentée par *M* branches, elles-mêmes alimentées par ledit signal transmis, et comprenant chacune un décimateur d'ordre *N* suivi d'un module de filtrage, et alimentant *K* multiplieurs de décalage de phase, délivrant une estimation des données source.

**14.** Procédé de démodulation selon la revendication 13, **caractérisé en ce qu'**il délivre des données $\hat{c}_{m,n-a}$ telles que :

$$\hat{x}_1^2(n-a) = s[nN-b-l]$$

$$\hat{x}_l^1(n-a) = \sum_k \breve{p}[l+kM]\hat{x}_l^2(n-a-K_0k)$$

$$\hat{x}_l^0(n-a) = \sqrt{2}e^{-j\frac{2\pi}{k}l\frac{D}{2}}\sum_{k=0}^{K-1}\hat{x}_l^1(n-a)e^{j\frac{2\pi}{K}kl}$$

$$[\hat{x}_0^0(n\text{-}a) \ ... \ \hat{x}_{K\text{-}1}^0(n\text{-}a)] = K\sqrt{2}e^{-j\frac{2\pi}{K}l\frac{D}{2}}IFFT[\hat{x}_0^1(n\text{-}a) \ ... \ \hat{x}_{M\text{-}1}^1(n\text{-}a)]$$

$$\hat{c}_{m,n\text{-}a} = \hat{x}_m^0(n-a)$$

avec *a* entier présentant le retard de reconstruction ;
et *b* entier compris entre 0 et N-1 ; et

$$D = aN - b \ ;$$

et *s*[*k*] un signal complexe de type BFDM/SM
et  $\breve{r}$[*k*] une fonction discrète, causale, de support fini, appelée prototype de démodulation.

**15.** Procédé de transmission, de modulation ou de démodulation selon l'une quelconque des revendications 1 à 14, **caractérisé en ce que** ledit signal multiporteuse biorthogonal est un signal multiporteuse orthogonal multiplexé par division en fréquence associé à des porteuses modulées de façon synchrone, OFDM/SM.

**16.** Dispositif d'émission d'un signal multiporteuse biorthogonal multiplexé par division en fréquence associé à des porteuses modulées de façon synchrone, BFDM/SM, apte à coopérer avec un dispositif de réception pour mettre en oeuvre le procédé de transmission et de réception selon l'une quelconque des revendications 1 à 14, ledit dispositif d'émission comprenant des moyens de modulation dudit signal, à l'aide d'un banc de filtres de synthèse (11), et des moyens d'application d'un retard (13) de durée prédéterminée aux symboles modulés délivrés par ledit banc de filtres de synthèse, ledit dispositif de réception comprenant des moyens de démodulation dudit signal, à l'aide d'un banc de filtres d'analyse (12), lesdits bancs de filtres formant une structure de transmultiplexeur, **caractérisé en ce que** les moyens de filtrage dudit banc de filtres de synthèse (11) sont regroupés sous la forme d'une matrice polyphase à *K* entrées et *M* sorties, en émission, les moyens de filtrage dudit banc de filtres d'analyse (12) étant regroupés sous la forme d'une matrice polyphase à *M* entrées et *K* sorties, en réception, *K* étant le nombre de porteuses dudit signal multiporteuse et *M* le plus petit commun multiple de *K* et *N,* où *N* est l'ordre d'un expanseur dans lesdits moyens de modulation et l'ordre d'un décimateur dans lesdits moyens de démodulation et est choisi strictement supérieur à *K*.

**17.** Dispositif de réception d'un signal multiporteuse biorthogonal multiplexé par division en fréquence associé à des porteuses modulées de façon synchrone, BFDM/SM, apte à coopérer avec un dispositif d'émission pour mettre en oeuvre le procédé de transmission et de réception selon l'une quelconque des revendications 1 à 14, et ledit dispositif de réception comprenant des moyens de démodulation dudit signal, à l'aide d'un banc de filtres d'analyse (12), lesdits bancs de filtres formant une structure de transmultiplexeur, ledit dispositif d'émission comprenant des moyens de modulation dudit signal, à l'aide d'un banc de filtres de synthèse (11), et des moyens d'application d'un retard (13) de durée prédéterminée aux symboles modulés délivrés par ledit banc de filtres de synthèse, **caractérisé en ce que** les moyens de filtrage dudit banc de filtres d'analyse (12) sont regroupés sous la forme d'une matrice polyphase à *M* entrées et *K* sorties, en réception, les moyens de filtrage dudit banc de filtres de synthèse (11) étant regroupés sous la forme d'une matrice polyphase à *K* entrées et *M* sorties, en émission, K étant le nombre de porteuses dudit signal multiporteuse et *M* le plus petit commun multiple de *K* et *N*, où *N* est l'ordre d'un expanseur dans lesdits moyens de modulation et l'ordre d'un décimateur dans lesdits moyens de démodulation et est choisi strictement supérieur à *K*.

**Patentansprüche**

**1.** Verfahren zum Senden und Empfangen eines zweifach orthogonalen Mehrfachträgersignals, das durch mit synchron modulierten Trägerfrequenzen assoziierte Frequenzteilung gemultiplext wird und nachfolgend mit dem Namen BFDM/SM bezeichnet wird, welches folgendes aufweist:

- einen Schritt zum Modulieren dieses Signals mit Hilfe einer Bank von Synthesefiltern (11),
- einen Schritt zum Demodulieren dieses Signals mit Hilfe einer Bank von Analysefiltern (12), wobei diese Filterbänke eine Transmultiplexer-Struktur bilden, und
- einen Schritt zum Anwenden einer Verzögerung (13) vorgegebener Dauer auf die von der Bank von Synthesefiltern gelieferten modulierten Symbole,

**dadurch gekennzeichnet, dass** es einen Schritt zur erneuten Zusammenlegung der Filterungsmittel der Bank von Synthesefiltern (11) bzw. der Bank von Analysefiltern (12) aufweist, jeweils in Form einer Matrix mit mehreren Phasen mit $K$ Eingängen und $M$ Ausgängen beim Senden und in Form einer Matrix mit mehreren Phasen mit $M$ Eingängen und $K$ Ausgängen beim Empfang,
wobei $K$ die Zahl der Trägerfrequenzen des Mehrfachträgersignals und $M$ das kleinste gemeinsame Vielfache von $K$ und $N$ ist, wobei $N$ die Ordnung eines Expanders im Modulationsschritt und eines Dezimators im Demodulationsschritt ist und streng größer als $K$ gewählt wird.

2. Verfahren zum Senden und Empfangen nach Anspruch 1,
   **dadurch gekennzeichnet, dass** die Dauer der Verzögerung (13) b mal die Dauer eines der modulierten Symbole beträgt, wobei b eine ganze Zahl größer als 1 ist.

3. Verfahren zum Senden und Empfangen nach einem der Ansprüche 1 oder 2,
   **dadurch gekennzeichnet, dass** es die folgenden Schritte umfasst:

   - Modulation mit Hilfe einer Bank von Synthesefiltern (11), die $K$ parallele Zweige aufweist, wobei $K \geq 2$ ist und wobei jeder Zweig von Quellendaten gespeist wird und jeweils einen Expander der Ordnung $N > K$ sowie Mittel zum Filtern aufweist;
   - Anwendung einer Verzögerung bei der Wiederherstellung (13) der von der Bank von Synthesefiltern gelieferten modulierten Symbole, mit Hilfe eines Verzögerungsoperators über eine von der erwähnten Bank von Synthesefiltern gespeisten Sendeleitung;
   - Demodulierung mit Hilfe einer Bank von Analysefiltern (12), die jeweils $K$ parallele Zweige aufweisen und jeweils einen Dezimator der Ordnung $N$ und Filterungsmittel umfassen und für die erwähnten Quellendaten repräsentative empfangene Daten liefern, wobei diese Filterungsmittel von einer im Voraus festgelegten Prototyp-Modulationsfunktion deduziert werden.

4. Verfahren zum Senden und Empfangen nach Anspruch 3,
   **dadurch gekennzeichnet, dass** b streng kleiner als $N$ ist.

5. Verfahren zum Senden und Empfangen nach einem der Ansprüche 2 bis 4,
   **dadurch gekennzeichnet, dass** die besagte ganze Zahl b folgendes berücksichtigt:

   - eine von der zweifach orthogonalen Struktur des Signals eingeführte Verzögerung;
   - die auf jeden abgetasteten Wert angewandte zweifach orthogonale Filterungsfunktion.

6. Verfahren zum Senden und Empfangen nach Anspruch 5,
   **dadurch gekennzeichnet, dass** b = $aN$ - $D$ ist, wobei:

   $D$ ein ganzer Parameter ist, so dass:

   $$\psi_{m,n} = -\frac{2\pi}{K} \cdot m(nN + \frac{D}{2})$$

   $m,n$ : Zeit- und Frequenzindizes der Symbole;
   $\psi_{m,n}$ additive Phasenverschiebung, angewandt auf die Filterungsfunktion des indizierten Symbols.

   Dabei ist a eine ganze Zahl, die eine Verzögerung bei der Wiederherstellung darstellt, entsprechend der Zahl der Verzögerungssymbole zwischen einer gesendeten Folge und einer ihr genau entsprechenden empfangenen Folge.

7. Verfahren zum Senden und Empfangen nach einem der Ansprüche 1 bis 6,
   **dadurch gekennzeichnet, dass** mindestens eine der erwähnten Matrizen mit mehreren Phasen eine inverse Fourier-Transformierte (41, 51) umfasst.

8. Verfahren zum Senden und Empfangen nach einem der Ansprüche 1 bis 7,
   **dadurch gekennzeichnet, dass** die Synthesefilter und die Analysefilter auf der Grundlage von Prototypfiltern aufgebaut sind, welche die folgenden Bedingungen einhalten:

$$\sum_{n=0}^{n_{l,\lambda}} \breve{G}_{nK+l}(z) G_{\lambda N-b-(nK+l)}(z) + z^{-l} \sum_{n=n_{l,\lambda}+1}^{N_{0-1}} \breve{G}_{nK+l}(z) G_{M+\lambda N-b-(nK+l)}(z) = \frac{z^{-s}}{2K} d_{\lambda-a,K_0} \qquad (68)$$

wobei:

$a$ eine ganze Zahl ist, welche die Verzögerung bei der Wiederherstellung darstellt;

$b$ eine zwischen 0 und N-1 liegende ganze Zahl ist;

$$M = K_0 N = N_0 K;$$

$l$ eine ganze Zahl ist, mit $0 \le l \le M\text{-}1$ ;

$$\lambda \in \Lambda_b, \text{ mit } \Lambda_b = \begin{cases} \{0, ..., K_0\text{-}1\} & \text{wenn } b = 0 \\ \{1, ..., K_0\} & \text{ansonsten} \end{cases}$$

$\lambda_0$ das einzige Element von $\Lambda_b$ ist, das mit $a$ modulo $K_0$ kongruent ist;

$$d_{m,n} = \begin{cases} 1 & \text{wenn } m \text{ ein Vielfaches von } n \text{ ist} \\ 0 & \text{ansonsten} \end{cases} \quad \text{wobei } (m, n) \text{ ganze Zahlen sind;}$$

$$s = \frac{a - \lambda_0}{K_0} \; ;$$

$$n_{l,\lambda} = \left\lceil \frac{\lambda N - b - l}{K} \right\rceil ;$$

$$G_l(z) = \sum_n p[l + nM] z^{-n} \, ,$$

wobei $p[k]$ eine diskrete, kausale Funktion mit endlicher Stütze ist, die Modulationsprototyp genannt wird;

$$\breve{G}_l(z) = \sum_n \breve{p}[l + nM] z^{-n} \, ,$$

wobei $\breve{p}[k]$ eine diskrete, kausale Funktion mit endlicher Stütze ist, die Demodulationsprototyp genannt wird.

9. Verfahren zum Senden und Empfangen nach Anspruch 8,
   **dadurch gekennzeichnet, dass** $N$ ein Vielfaches von $K$ ist und, dass die erwähnten Prototypfilter die folgende Bedingung erfüllen:

$$\sum_{n=0}^{n_l} \breve{G}_{nK+l}(z)G_{d-(nK+l)}(z) + z^{-l}\sum_{n=n_l+l}^{N_{-l}} \breve{G}_{nK+l}(z)G_{M+d-(nK+l)}(z) = \frac{z^{-S}}{2K} \tag{69}$$

- $d = \lambda_0 N\text{-}b$;

- 

$$n_l = \left\lceil \frac{d-l}{K} \right\rceil$$

10. Verfahren zum Senden und Empfangen nach einem der Ansprüche 8 oder 9, **dadurch gekennzeichnet, dass** das Mehrträgersignal von orthogonaler, durch mit synchron modulierten Trägerfrequenzen assoziierte Frequenzteilung gemultiplexter, OFDM/SM Art ist und dass die besagten Prototypfilter die folgende Bedingung erfüllen

$$\sum_{n=0}^{N_0-1} z^{a\lambda,nK+l}\breve{G}_{nK+l}(z)\widetilde{\breve{G}}_{nK+l+(a_\lambda+a_{\lambda,nK+l}K_0)N}(z) = \frac{\delta_{a\lambda,0}}{2K} \tag{71}$$

$$\widetilde{G}_l(z) = G_l^*(z);$$

$$a_\lambda = \left\lceil \frac{a-\lambda}{K_0} \right\rceil;$$

$$a_{\_k} = \begin{cases} 0, \text{ wenn } 0 \le k + a_\lambda N \le M\text{-}1; \\ \text{-}1 \text{ ansonsten.} \end{cases}$$

11. Verfahren zur Modulation eines Signals, das nach dem Verfahren eines der Ansprüche 1 bis 10 gesendet wird, **dadurch gekennzeichnet, dass** es eine inverse Fourier-Transformierte (41) anwendet, die von $K$ Quellendaten gespeist wird, die jeweils einer vorgegebenen Phasenverschiebung unterzogen wurden, und die $M$ Filterungsmodule speist, die jeweils von einem Expander der Ordnung $N$ gefolgt werden, deren Ausgänge umgruppiert und dann gesendet werden, wobei $M$ das kleinste gemeinsame Vielfache von $N$ und $K$ ist.

12. Modulationsverfahren nach Anspruch 11, **dadurch gekennzeichnet, dass** es Daten $s[k]$ liefert, derart dass:

$$x_m^0(n) = c_{m,n}$$

$$x_l^l(n) = \sqrt{2}\sum_{k=0}^{K-l} x_k^0(n)e^{-j\frac{2\pi}{K}k\frac{D}{2}}e^{j\frac{2\pi}{K}kl}$$

$$\left[x_0^l(n) \quad \dots \quad x_{M-l}^l(n)\right] = k\sqrt{2}\,IFFT\left[x_0^0(n) \quad \dots \quad x_{k-l}^0 e^{-j\frac{2\pi}{K}(k-l)\frac{D}{2}}\right]$$

$$x_l^2(n) = \sum_k p\big[l + kM\big] x_k^1(n - K_0 k)$$

$$s[k] = \sum_{n=\left[\frac{k}{M}\right]-l}^{\left[\frac{k}{M}\right]} x_{k-nM}^2(n),$$

wobei

$c_{m,n}$ den zu sendenden komplexen Symbolen entspricht,
$m$ und $n$ die Zeit- und Frequenzindizes der Symbole sind,

und

$$D = aN - b,$$

wobei

$a$ eine ganze Zahl ist, welche die Verzögerung bei der Wiederherstellung darstellt;
$b$ eine ganze Zahl zwischen 0 und $N$-1 ist,

und [.] die Funktion "ganzer Teil" ist, und

$$M = K_0 N = N_0 K,$$

und $p[k]$ eine diskrete, kausale Funktion mit endlicher Stütze ist, die Modulationsprototyp genannt wird.

**13.** Verfahren zur Demodulation eines Signals, das nach dem Verfahren eines der Ansprüche 1 bis 10 gesendet wird, **dadurch gekennzeichnet, dass** es eine inverse Fourier-Transformierte (51) anwendet, die von $M$ Zweigen gespeist wird, die selbst von dem gesendeten Signal gespeist werden und jeweils einen von einem Filterungsmodul gefolgten Dezimator der Ordnung $N$ umfassen und $K$ Phasenverschiebungsmultiplikatoren speisen, die eine Schätzung der Quellendaten liefern.

**14.** Demodulationsverfahren nach Anspruch 13, **dadurch gekennzeichnet, dass** es Daten $c_{m,n-a}$ liefert, derart dass:

$$\hat{x}_1^2(n-a) = s[nN-b-l]$$

$$\hat{x}_l^1(n - a) = \sum_k \tilde{p}\big[l + kM\big] \hat{x}_l^2(n - a - K_0 k)$$

$$\hat{x}_l^0(n - a) = \sqrt{2}e^{-j\frac{2\pi}{K}l\frac{D}{2}} \sum_{k=0}^{K-l} \hat{x}_l^1(n - a)e^{j\frac{2\pi}{K}kl}$$

$$[\hat{x}_0^0(n\text{-}a) \ldots \hat{x}_{K-l}^0(n\text{-}a)] = K\sqrt{2}e^{-j\frac{2\pi}{K}l\frac{D}{2}} IFFT[\hat{x}_0^1(n\text{-}a) \ldots \hat{x}_{M-l}^1(n\text{-}a)]$$

$$\hat{c}_{m,n-a} = \hat{x}^0_m(n-a)$$

wobei

    *a* eine ganze Zahl ist, welche die Verzögerung bei der Wiederherstellung darstellt;
und *b* eine ganze Zahl ist, die zwischen 0 und N-1 liegt;

und

$$D = aN - b;$$

und *s[k]* ein komplexes Signal vom Typ BFDM/SM ist; und $\breve{\gamma}[k]$ eine diskrete, kausale Funktion mit endlicher Stütze ist, die Demodulationsprototyp genannt wird.

**15.** Verfahren zum Senden, Modulieren und Demodulieren nach einem der Ansprüche 1 bis 14,
**dadurch gekennzeichnet, dass** das zweifach orthogonale Mehrfachträgersignal ein OFDM/SM orthogonales Mehrfachträgersignal ist, das durch mit synchron modulierte Trägerfrequenzen assoziierte Frequenzteilung gemultiplext wird.

**16.** Vorrichtung zum Senden eines BFDM/SM zweifach orthogonalen Mehrfachträgersignals, das durch mit synchron modulierten Trägerfrequenzen assoziierte Frequenzteilung gemultiplext wird und dazu geeignet ist, zusammen mit einer Empfangsvorrichtung zu arbeiten, um das Verfahren zum Senden und Empfangen nach einem der Ansprüche 1 bis 14 anzuwenden,
wobei die Sendevorrichtung über Mittel zum Modulieren des besagten Signals mit Hilfe einer Bank von Synthesefiltern (11) sowie über Mittel zum Anwenden einer Verzögerung (13) vorgegebener Dauer auf die durch die Bank von Synthesefiltern modulierten Symbole verfügt,
wobei die Empfangsvorrichtung über Mittel zum Demodulieren des besagten Signals mit Hilfe einer Bank von Analysenfiltern (12) verfügt, wobei diese Filterbänke die Struktur eines Transmultiplexers bilden,
**dadurch gekennzeichnet, dass** die Mittel zum Filtern der Bank von Synthesefiltern (11) in Form einer Matrix mit mehreren Phasen umgruppiert werden, die beim Senden *K* Eingänge und MAusgänge aufweist, dass die Mittel zum Filtern der Bank von Analysefiltern (12) in Form einer Matrix mit mehreren Phasen umgruppiert werden, die beim Empfang *M* Eingänge und *K* Ausgänge aufweist,
wobei *K* die Zahl der Trägerfrequenzen des Mehrfachträgersignals und *M* das kleinste gemeinsame Vielfache von *K* und *N* ist, wobei *N* die Ordnung eines Expanders in den Modulationsmitteln und die Ordnung eines Dezimators in den Demondulationsmitteln ist und streng größer als *K* gewählt wird.

**17.** Vorrichtung zum Empfangen eines BFDM/SM zweifach orthogonalen Mehrfachträgersignals, das durch mit synchron modulierte Trägerfrequenzen assoziierte Frequenzteilung gemultiplext wird und dazu geeignet ist, zusammen mit einer Empfangsvorrichtung zu arbeiten, um das Verfahren zum Senden und Empfangen nach einem der Ansprüche 1 bis 14 anzuwenden,
wobei die Empfangsvorrichtung über Mittel zum Demodulieren des besagten Signals mit Hilfe einer Bank von Analysefiltern (12) verfügt, wobei diese Filterbänke die Struktur eines Transmultiplexers bilden,
wobei die Sendevorrichtung über Mittel zum Modulieren des besagten Signals mit Hilfe einer Bank von Synthesefiltern (11) sowie über Mittel zum Anwenden einer Verzögerung (13) vorgegebener Dauer auf die durch die Bank von Synthesefiltern modulierten Symbole verfügt,
**dadurch gekennzeichnet, dass** die Mittel zum Filtern der Bank von Analysefiltern (12) in Form einer Matrix mit mehreren Phasen umgruppiert werden, die beim Empfang *M* Eingänge und *K* Ausgänge aufweist,
dass die Mittel zum Filtern der Bank von Synthesefiltern (11) in Form einer Matrix mit mehreren Phasen umgruppiert werden, die beim Senden *K* Eingänge und *M* Ausgänge aufweist,
wobei *K* die Zahl der Trägerfrequenzen des Mehrfachträgersignals und *M* das kleinste gemeinsame Vielfache von *K* und *N* ist, wobei *N* die Ordnung eines Expanders in den Modulationsmitteln und die Ordnung eines Dezimators in den Demondulationsmitteln ist und streng größer als *K* gewählt wird.

**Claims**

1. Method for transmitting and receiving a biorthogonal multicarrier signal multiplexed by frequency division combined with carriers modulated in a synchronous manner, termed hereinafter BFDM/SM, involving:

   - a modulation stage of the said signal by means of a synthesis filter bank (11),

   - a demodulation stage of the said signal by means of an analysis filter bank (12), the said filter banks forming a transmultiplex structure, and

   - a stage comprising application of a delay (13) of predetermined duration to the modulated symbols delivered by the said synthesis filter bank,

   **characterised in that** it comprises a regrouping stage of the filtering means of the said synthesis filter bank (11) and of the said analysis filter bank (12) respectively in the form of a polyphase matrix with $K$ inputs and $M$ outputs in emission, and a polyphase matrix with $M$ inputs and $K$ outputs in reception,
   $K$ being the number of carriers of the said multicarrier signal and $M$ being the smallest common multiple of $K$ and $N$, where $N$ is the order of an expander in the modulation stage and of a decimator in the demodulation stage and is chosen specifically greater than $K$.

2. Transmitting and receiving method according to claim 1, **characterised in that** the said delay (13) has a duration that is b times the duration of one of the said modulated symbols, b being an integer greater than 1.

3. Transmitting and receiving method according to either of claims 1 and 2, **characterised in that** it comprises the following stages:

   - modulation by means of a synthesis filter bank (11) having $K$ parallel branches, $K \geq 2$, each supplied with source data, and each comprising an expander of the order $N > K$ and filtering means;

   - application of a reconstruction delay (13) of the modulated symbols delivered by the said synthesis filter bank, by means of a delay operator on a transmission line fed by the said synthesis filter bank;

   - demodulation by means of an analysis filter bank (12) having $K$ parallel branches, each comprising a decimator of order $N$ and filtering means, and delivering received data representative of the said source data, the said filtering means being derived from a predetermined prototype modulation function.

4. Transmitting and receiving method according to claim 3, **characterised in that** b is specifically less than $N$.

5. Transmitting and receiving method according to any one of claims 2 to 4, **characterised in that** the said integer b takes into account:

   - a delay introduced by the biorthogonal structure of the said signal;

   - the biorthogonal filtering function applied to each sample.

6. Transmitting and receiving method according to claim 5, **characterised in that** b = aN-D, where:

   $D$ is an integer parameter such that:

   $$\Psi_{m,n} = -\frac{2\pi}{K}.m(nN + \frac{D}{2})$$

   $m,n$ are time and frequency indices of the symbols;

   $\Psi_{m,n}$ is the additive phase shift applied to the filtering function of the subscripted symbol,

   a is an integer representing a reconstruction delay corresponding to the delay symbol number between an emitted sequence and a received sequence that corresponds to it exactly.

7. Transmitting and receiving method according to any one of claims 1 to 6, **characterised in that** at least one of the said polyphase matrices comprises an inverse Fourier transform (41, 51).

8. Transmitting and receiving method according to any one of claims 1 to 7, **characterised in that** the said synthesis filters and said analysis filters are constructed from prototype filters satisfying the following condition:

$$\sum_{n=0}^{n_{l\lambda}} \breve{G}_{nK+l}(z) G_{\lambda N-b-(nK+l)}(z) + z^{-1} \sum_{n=n_{l\lambda}+1}^{N_0-1} \breve{G}_{nK+l}(z) G_{M+\lambda N-b-(nK+l)}(z) = \frac{z^{-s}}{2K} d_{\lambda-a,K_0} \quad (68)$$

where

$a$ is an integer comprising the reconstruction delay;

$b$ is an integer between 0 and $N$-1;

$$M = K_0 \ N = N_0 \ K;$$

$l$ is an integer, where $0 \leq l \leq M$-1;

$$\lambda \in \Lambda_b,$$

where

$$\Lambda_b = \begin{cases} \{0,...,K_0-1\} & \text{if } b = 0 \\ \{1,...,K_0\} & \text{otherwise} \end{cases}$$

$\lambda_0$ is a unique element of $\Lambda_b$ congruent to $a$ modulo $K_0$;

$$d_{m,n} = \begin{cases} 1 & \text{if } m \text{ is a multiple of } n, \\ 0 & \text{otherwise, where } (m, \ n) \text{ are} \end{cases}$$
$$\text{integers;}$$

$$s = \frac{a - \lambda_0}{K_0} \ ;$$

$$n_{l,k} = \left\lfloor \frac{\lambda N - b - l}{K} \right\rfloor \ ;$$

$$G_l(z) = \sum_n p[l + nM] z^{-n}$$

where $p[k]$ is a finite support, causal discrete function, termed modulation prototype;

$$\tilde{G}_l(z) = \sum_n \tilde{p}[l + nM] z^{-n},$$

where $\tilde{p}[k]$ is a finite support, causal discrete function, termed demodulation prototype.

9. Transmitting and receiving method according to claim 8, **characterised in that** $N$ is a multiple of $K$ and **in that** the said prototype filters satisfy the following condition:

$$\sum_{n=0}^{n_l} \tilde{G}_{nK+l}(z) G_{d-(nK+l)}(z) + z^{-1} \sum_{n=n_l+1}^{N_0-1} \tilde{G}_{nK+l}(z) G_{M+d-(nK+l)}(z) = \frac{z^{-s}}{2K} \qquad (69)$$

- $d = \lambda_0 N - b$ ;

- 
$$n_l = \left\lfloor \frac{d - l}{K} \right\rfloor$$

10. Transmitting and receiving method according to either of claims 8 and 9, **characterised in that** the said multicarrier signal is an orthogonal type signal multiplexed by frequency division combined with carriers modulated in a synchronised manner, designated OFDM/SM, and **in that** the said prototype filters satisfy the following condition:

$$\sum_{n=0}^{N_0-1} z^{a_{\lambda-K u}} \tilde{G}_{nK+l}(z) \tilde{G}_{nK+l+(a_\lambda+a_{\lambda,k}+uK_0)N}(z) = \frac{\delta_{c\lambda 0}}{2K} \qquad (71)$$

$$\tilde{G}_l(z) = G_l^*(z) ;$$

$$a_\lambda = \left\lfloor \frac{a - \lambda}{K_0} \right\rfloor ;$$

$$a_{\lambda,k} = \begin{cases} 0 & \text{if } 0 \le k + a_\lambda N \le M-1 ; \\ -1 & \text{otherwise} \end{cases}$$

11. Method for modulating a signal transmitted according to the method of any one of claims 1 to 10, **characterised in that** it involves an inverse Fourier transform (41) supplied with $K$ source data each of which has undergone a predetermined phase shift, and supplying $M$ filtering modules, each followed by an expander of order $N$, the outputs of which are regrouped and then transmitted, where $M$ is the smallest common multiple of $N$ and $K$.

12. Modulation method according to claim 11, **characterised in that** it delivers data $s[k]$ such that:

$$x_m^0(n) = c_{m,n}$$

$$x_l^1(n) = \sqrt{2} \sum_{k=0}^{K-1} x_k^0(n) e^{-j\frac{2\pi}{K} l \frac{D}{2}} e^{j\frac{2\pi}{K} l l}$$

$$\left[ x_0^1(n) \quad \cdots \quad x_{M-1}^1(n) \right] = k\sqrt{2}\, IFFT\left[ x_0^0(n) \quad \cdots \quad {}_{k-1}^0(n)e^{-j\frac{2\pi}{k}(k-1)\frac{D}{2}} \right]$$

$$x_l^2(n) = \sum_k p[l+kM]\, x_k^1(n-K_0 k)$$

$$s[k] = \sum_{n=\left\lfloor \frac{k}{M} \right\rfloor - 1}^{\left\lfloor \frac{k}{M} \right\rfloor} x_{k-nM}^2(n)$$

where $c_{m,n}$ corresponds to the complex symbols to be transmitted,
*where m* and *n* are the time and frequency indices of the symbols;
and D = aN - b,
*where a* is an integer comprising the reconstruction delay; *b* is an integer between 0 and *N* - 1;
and $\lfloor \cdot \rfloor$ is the "integral part" function,
and $M = K_0 N = N_0 K$,
and *p*[*k*] is a finite support, causal discrete function termed modulation prototype.

**13.** Method for demodulating a signal transmitted by the transmission method according to any one of claims 1 to 10, **characterised in that** it involves an inverse Fourier transform (51) supplied by *M* branches, the branches themselves being supplied by the said transmitted signal, and each comprising a decimator of order *N* followed by a filtering module, and supplying *K* phase shift multipliers delivering an estimate of the source data.

**14.** Demodulation method according to claim 13,
**characterised in that** it delivers data $\hat{c}_{m,n-a}$ such that:

$$\hat{x}_1^2(n-a)=s[nN-b-l]$$

$$\hat{x}_l^1(n-a) = \sum_k \breve{p}[l+kM]\, \hat{x}_l^2(n-a-K_0 k)$$

$$\hat{x}_l^0(n-a) = \sqrt{2}\, e^{-j\frac{2\pi}{k}l\frac{D}{2}} \sum_{k=0}^{K-1} \hat{x}_l^1(n-a)e^{j\frac{2\pi}{K}kl}$$

$$\left[ \hat{x}_0^0(n-a) \quad \cdots \quad \hat{x}_{K-1}^0(n-a) \right] = K\sqrt{2}\, e^{-j\frac{2\pi}{K}l\frac{D}{2}}\, IFFT\left[ \hat{x}_0^1(n-a) \, \ldots \, x_{M-1}^1(n-a) \right]$$

$$\hat{c}_{m,n-a} = \hat{x}_m^0(n-a)$$

*where a* is an integer comprising the reconstruction delay;
and *b* is an integer between 0 and N-1;
and *D = aN - b*;
and *s*[*k*] is a complex signal of the type BFDM/SM
and $\breve{p}[k]$ is a finite support, causal discrete function, termed demodulation prototype.

**15.** Transmission, modulation or demodulation method according to any one of claims 1 to 14, **characterised in that**

**EP 1 354 453 B1**

the said biorthogonal multicarrier signal is an orthogonal multicarrier signal multiplexed by frequency division combined with carriers modulated in a synchronous manner, termed OFDM/SM.

16. Emitting device for a biorthogonal multicarrier signal multiplexed by frequency division combined with carriers modulated in a synchronous manner, termed BFDM/SM, capable of co-operating with a receiving device for implementing the transmitting and receiving method according to any one of claims 1 to 14, the said emitting device comprising means for modulating the said signal, by means of a synthesis filter bank (11), and means for applying a delay (13) of predetermined duration to the modulated symbols delivered by the said synthesis filter bank, the said receiving device comprising means for demodulating the said signal, by means of an analysis filter bank (12), the said filter banks forming a transmultiplexer structure,
**characterised in that** the filtering means of the said synthesis filter bank (11) are grouped in the form of a polyphase matrix with $K$ inputs and $M$ outputs in emission, the filtering means of the said analysis filter bank (12) being grouped in the form of a polyphase matrix with $M$ inputs and $K$ outputs in reception, $K$ being the number of carriers of the said multicarrier signal and $M$ being the smallest common multiple of $K$ and $N$, where $N$ is the order of an expander in the said modulation means and the order of a decimator in the said demodulation means and is chosen specifically greater than $K$.

17. Device for receiving a biorthogonal multicarrier signal multiplexed by frequency division combined with carriers modulated in a synchronous manner, termed BFDM/SM, capable of co-operating with an emitting device for implementing the method of transmitting and receiving according to any one of claims 1 to 14, the said receiving device comprising means for demodulating the said signal, by means of an analysis filter bank (12), the said filter banks forming a transmultiplexer structure, the said emitting device comprising means for modulating the said signal, by means of a synthesis filter bank (11), and means for applying a delay (13) of predetermined duration to the modulated signals delivered by the said synthesis filter bank,
**characterised in that** the filtering means of the said analysis filter bank (12) are grouped in the form of a polyphase matrix with $M$ inputs and $K$ outputs, in reception, the filtering means of the said synthesis filter banks (11) being regrouped in the form of a polyphase matrix with $K$ inputs and $M$ outputs, in emission,
$K$ being the number of carriers of the said multicarrier signal and $M$ being the smallest common multiple of $K$ and $N$, where $N$ is the order of an expander in the said modulation means and the order of a decimator in the said demodulation means, and is chosen specifically greater than $K$.

**Fig. 1**

EP 1 354 453 B1

**Fig. 2**

**Fig. 3**

Fig. 4

**Fig. 4-bis**

**Fig. 5**

Fig. 5-bis

EP 1 354 453 B1

$$\boxed{\;\longrightarrow\;\bigcirc\!\uparrow N\;\longrightarrow\;\boxed{z^{-n}}\;\longrightarrow\;\bigcirc\!\downarrow N\;\longrightarrow\;}$$

**Fig. 6**

$$l' \;\longrightarrow\;\bigcirc\!\uparrow N\;\longrightarrow\;\boxed{z^{-(M-1-l'+l+b)}}\;\longrightarrow\;\bigcirc\!\downarrow N\;\longrightarrow\; l$$

**Fig. 7**